# EUROPÄISCHE PATENTSCHRIFT

(11) **EP 1 023 487 B1**
(45) Veröffentlichungstag und Bekanntmachung des Hinweises auf die Patenterteilung: **26.02.2003**
(21) Anmeldenummer: 98948858.0
(22) Anmeldetag: 21.08.1998
(51) Int. Cl.: D21C 5/02, D21B 1/32

(54) **VERFAHREN ZUR AUFBEREITUNG VON ALTPAPIER UNTER VERMEIDUNG VON BIOZIDEN UND CHLORVERBINDUNGEN, SOWIE VON WASSERSTOFFPEROXID UND PERESSIGSÄURE, EINRICHTUNG ZUR AUSFÜHRUNG DIESES VERFAHRENS SOWIE RECYCLING TISSUEPAPIERE MIT EINER GESAMTKEIMZAHL KLEINER 1000 KBE/G UND EINER OBERFLÄCHENKEIMZAHL KLEINER 20 KBE/DM2**
PROCESS AND DEVICE FOR TREATING WASTE PAPER WITHOUT BIOCIDES, CHLORINE COMPOUNDS, HYDROGEN PEROXIDE AND PERACETIC ACID, RECYCLED TISSUE PAPER WITH A TOTAL GERM NUMBER OF LESS THAN 1000 KBE/G AND A SURFACE GERM NUMBER OF LESS THAN 20 KBE/DM2
PROCEDE ET INSTALLATION POUR RETRAITER DES VIEUX PAPIERS SANS BIOCIDES, SANS COMPOSES CHLORES, SANS PEROXYDE D'HYDROGENE ET SANS ACIDE PERACETIQUE, ET RECYCLAGE DE PAPIER DE SOIE D'UNE TENEUR TOTALE EN GERME INFERIEURE A 1000 KBE/g ET D'UNE TENEUR EN GERME SUPERFICIELLE INFERIEURE A 20 KBE/DM2

(30) Priorität: 26.09.1997 DE 19742729
(43) Veröffentlichungstag der Anmeldung: 02.08.2000
(73) Patentinhaber: SCA Hygiene Products GmbH, 68305 Mannheim (DE)
(72) Erfinder: BERGER, Josef, A-2763 Neusiedl (AT); GEISHOFER, Friedrich, A-2763 Neusiedl (AT)
(74) Vertreter: Sieckmann, Ralf, Dr.
(86) Internationale Anmeldenummer: EP9805345
(87) Internationale Veröffentlichungsnummer: WO99016959

(56) Entgegenhaltungen:
- EP-A- 0 557 651
- EP-A- 0 568 404
- EP-A- 0 653 510
- DE-A- 2 240 726
- DE-A- 4 318 431

## Beschreibung

Die Erfindung betrifft ein Verfahren zur Aufbereitung von Altpapier unter Ausschluß von Bioziden und völligen Ausschluß von Chlorverbindungen sowie weitgehender Vermeidung von Wasserstoffperoxid und/oder Peressigsäure, welches weiterhin zu einem Recycling-Rohtissue und gegebenenfalls einem für den endgültigen Verbrauch geeignetem Tissue-Produkt mit einer Gesamtkeimzahl von weniger als 1000 KBE/g führt, eine Vorrichtung zur Durchführung des vorgenannten Verfahrens sowie ein Recycling Roh-Tissuepapier und gegebenenfalls ein für den endgültigen Verbrauch geeignetes Tissue-Produkt mit einer Keimzahl von weniger als 20 KBE/dm² und einer Gesamtkeimzahl kleiner 1000 KBE/g als Produkt. Die vorgenannten Keimzahlen werden dabei in Anlehnung an DIN 54378 (Oberflächenkeimzahl) und in Anlehnung an DIN 54379 (Gesamtkeimzaht) bestimmt.

Unter dem Begriff unter Ausschluß von Bioziden, der ja im Zusammenhang mit dem erfindungsgemäßen Verfahren eingesetzt wird, versteht man Biozidmengen, die, bezogen auf das Recycling-Rohtissue bzw. das für den endfertigen Verbrauch geeignete Tissueprodukt in geringen Mengen, vorzugsweise in Mengen von weniger als 0,01 Gew-% zugegen sind.

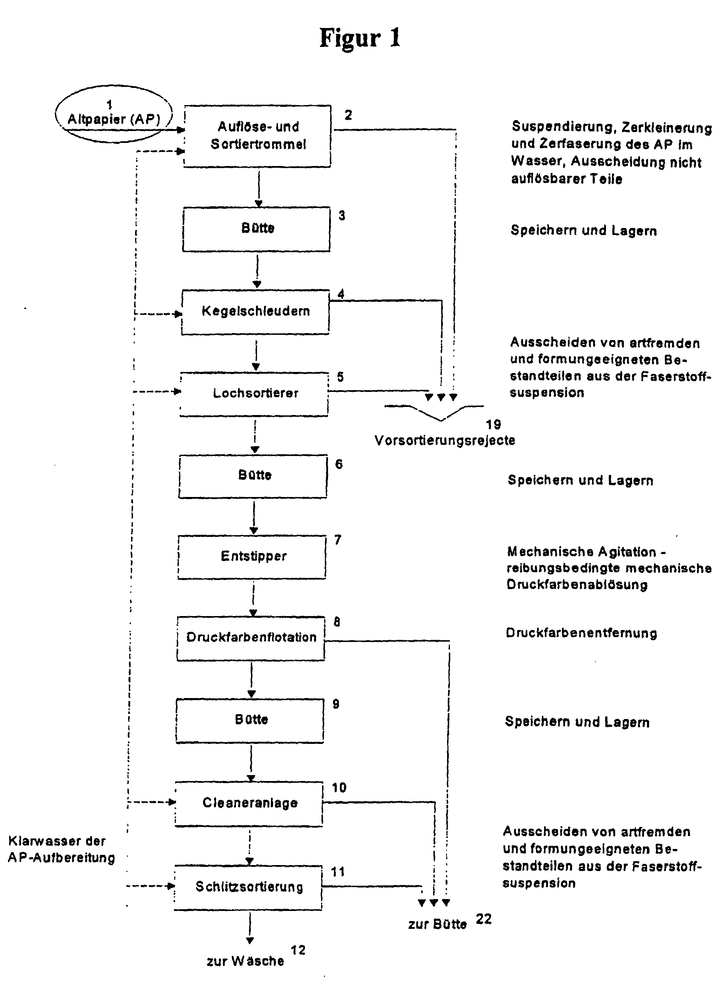

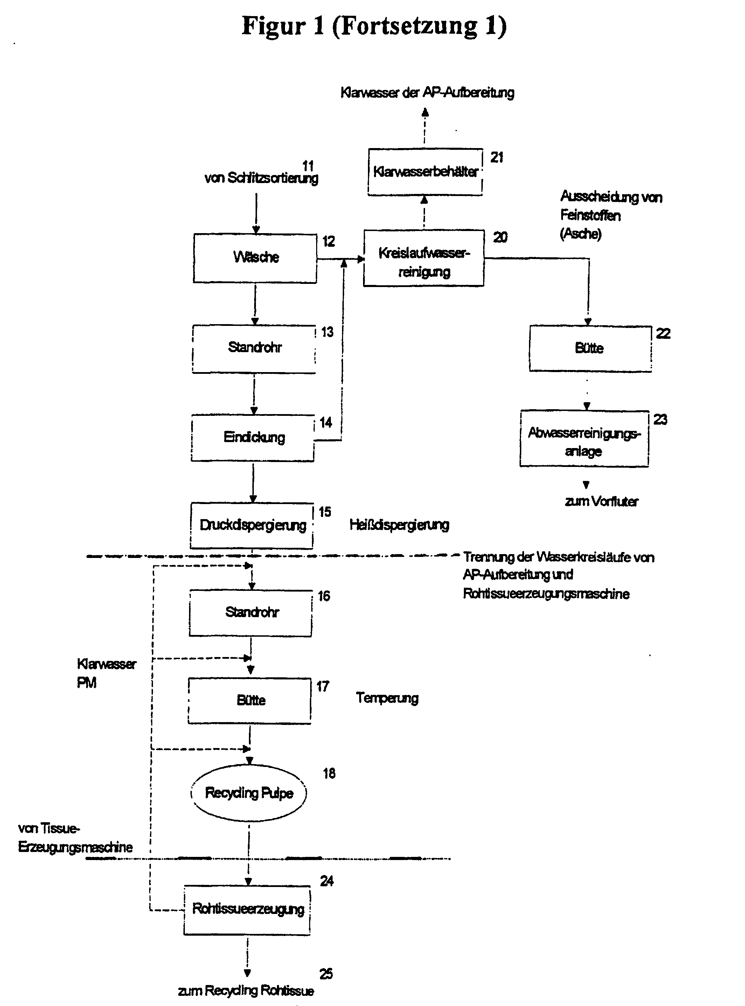

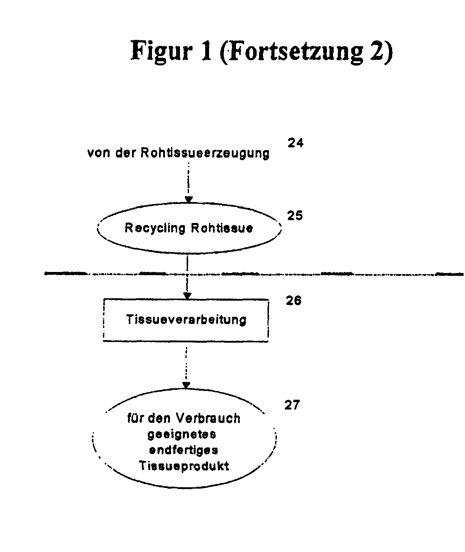

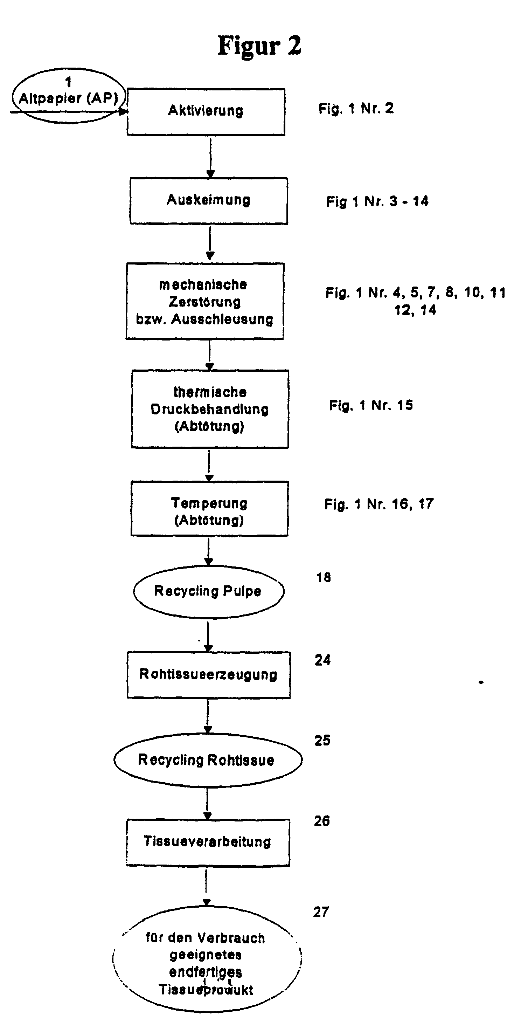

In diesem Zusammenhang soll auch darauf hingewiesen werden, daß auch das im Rahmen des erfindungsgemäßen Verfahrens, beispielsweise als Tempermedium eingesetzte Klarwasser der Papiermaschine, welches, wie aus Figur 1 ersichtlich, im Kreislauf geführt und über eine Kreislaufwasserreinigungsanlage (Sedifloat) gereinigt wird, von Hause aus nur Konzentrationen unterhalb der Nachweisgrenze von weniger als 0,1 ppm an Bioziel-Inhaltsstoffen aufweist, da ein entsprechende HPLC-Analyse negativ war. Auch im durchgeführten DCM-Extrakt wurden keine Komponenten eines Biozids nachgewiesen. Wie bekannt, werden in der vorgenannten Kreislaufwasserreinigungsanlage die Fein- und Füllstoffe vom Wasser nahezu quantitativ getrennt und so das gereinigte Wasser für Verdünnungszwecke wieder eingesetzt.

Der Aufsatz in dem PTS-Manuskript Band 19/95, Mikrobiozide in der Papiererzeugung von U. Höötmann, Hygienische Aspekte des Einsatzes verschiedener Altpapierqualitäten, gibt eine allgemeine Übersicht, aus welchen Ausgangsmaterialien, beispielsweise einem Faserrohstoff, rückgewonnen aus gemischtem Haushaltsabfall, gemischtem Altpapier, Industrieabfällen oder gemischtem Altpapier beziehungsweise aus einem Rohstoff aus Sammlungen im Rahmen des Dualen System Deutschlands eine entsprechende Aufbereitung von Abfallpapier erfolgen kann. Aus dieser allgemeinen Übersicht ergeben sich allerdings keine Hinweise darauf, daß hierdurch das erfindungsgemäße Verfahren, wie beansprucht, nahegelegt werden könnte.

Die DE-A-26 07 703 betrifft ein Verfahren zur Herstellung hygienisierten Retourpapiers aus papierhaltigen Abfällen, wobei eine Fraktion, die im wesentlichen aus Papierfragmenten oder einem Gemisch von Papier- und Kunststofffragmenten besteht, welche von einem Sieb mit einer Maschenweite von mindestens 20 mm zurückgehalten werden, in an sich bekannter Weise vom Abfall getrennt und einer kurzen Wärmebehandlung unterworfen wird, wobei den Fragmenten eine Temperatur von etwa 100 bis 130°C beigebracht wird, worauf die Fragmente, gegebenenfalls nach Abscheidung des Kunststoffanteils, unter Erhaltung einer Temperatur von mindestens 100 °C kompaktiert und die kompaktierten Fragmente bei einer Temperatur von etwa 100 bis 110°C mindestens 24 Stunden bei der jeweiligen Temperaturgrenze aufbewahrt werden. Diese Wärmebehandlung erfolgt über IR-Wärme, also eine trockene Hitze. Diesem Verfahren liegt die Aufgabe zugrunde, ein Retourpapier bereitzustellen, welches im Gegensatz zu konventionellen Verfahren nicht mehr mit einem Bakteriengehalt in der Größenordnung von 10⁹ heterotropher koloniebildender Bakterien pro Gramm Produkt sowie einer unbekannten Mange von Faul- und Schimmelpilzen und thermophilen Organismen belastet ist, die nicht nur eine Gesundheitsgefahr für das Handhabungspersonal ausüben, sondern auch zu einem lästigen Geruch und Schleimproblemen im Rückwassersystem der Papiermaschinen führt. Nach diesem Verfahren wird der Bakteriengehalt auf etwa 10² Bakterien pro Gramm eingewogenen Materials vermindert.

Durch diesen Stand der Technik wird allerdings der Gegenstand der vorliegenden Erfindung, wie beansprucht, nicht nahegelegt, das heißt, im wäßrigen Medium oder feuchter Hitze zu arbeiten und es gibt auch keinen Hinweis darauf, daß nach diesem Verfahren die Sporen der Bakterien oder Pilze vor der Keimung aktiviert werden sollen.

Die EP-B-0 514 864 betrifft ein Verfahren zur Behandlung von sekundärer Pulpe, die Zellulosefasern und klebrige Kontaminanten umfaßt und aus Altpapier hergestellt ist, bei dem man die Pulpe bei solchen Temperatur- und Sauerstoftpartialdruckbedingungen und für einen solchen Zeitraum mit einem sauerstoffhaltigen Gas ohne zugesetztes Alkali in Kontakt bringt, daß die Klebrigkeit der klebrigen Kontaminanten verringert wird, wodurch während der weiteren Verarbeitung der Zellulosefasem zu dem Recycling-Papierprodukt Probleme betrieblicher Art und in Bezug auf die Produktqualität reduziert werden. Dieses Inkontaktbringen geschieht vorzugsweise bei einer Temperatur zwischen 60 und 130 °C bei einem Sauerstoffpartialdruck zwischen 34,5 und 3.100 kPa.

Als Verfahrenserzeugnis erhält man so einerseits ein Produkt mit einem niedrigen Grad an Altpapier, welches bereits eine geeignete Festigkeit für spezielle Zwecke aufweist. Anderenfalls erhält man ein Produkt mit einem hohen Anteil an Recyclingpapier, welches beispielsweise für Zeitungen, Windeln, Tissue, Schreibpapiere und Druckpapiere eingesetzt werden kann. Diesem Stand der Technik liegt die Aufgabe zugrunde, ein vorgenanntes Behandlungsverfahren für sekundäre Pulpe bereitzustellen. Bezogen auf diesen Stand der Technik wird allerdings keine Aussage bezüglich einer Herstellung eines Recyclingpapiers gemacht, welches im wesentlichen biozidfrei hergestellt worden ist und aufgrund dieses Verfahrens eine Oberflächenkeimzahl von weniger als 20 KBE/dm² aufweist.

Das US-Patent 0 394 734 betrifft ein Verfahren zur Sterilisation von Gegenständen, vorzugsweise Verpackungsmaterial, mittels eines gasförmigen Sterilisationsmittels. Diese Druckschrift gibt allerdings keine Hinweise auf Parallelen zum erfindungsgemäßen Behandlungsverfahren, welches ohne Einsatz von Bioziden arbeitet und zu einer geringen Keimzahlbelastung des Verfahrenserzeugnisses führt.

Die DE-A-30 01 862 betrifft ein Verfahren zur Herstellung von Grundstoff für die Papierherstellung unter Verwendung von Altpapier, wobei das Müll-Altpapier bei der Aussortierung aus dem Müll bereits mit desinfizierenden gasförmigen Mitteln behandelt wird und daß erst danach das Altpapier, insbesondere durch Auflösung und Zerfaserung, für die Papierherstellung aufbereitet wird. Als Desinfektionsmittel beziehungsweise Biozid werden vorzugsweise Ozon oder Chlor eingesetzt. Hierdurch wird das erfindungsgemäße Verfahren weder vorbeschrieben noch nahegelegt, da es sich bei diesem Verfahren des Standes der Technik im Gegensatz zum erfindungsgemäßen Verfahren um ein trockenes Verfahren unter Verwendung von Desinfektionsmitteln handelt.

Die DE-B-22 14 786 betrifft ein Verfahren zur Vernichtung von Akten und ausgedienten Verpackungshüllen aus Papier oder Karton, bei dem das zu vernichtende Gut zunächst mechanisch zerkleinert und das zerkleinerte Gut anschließend zur Volumenverminderung gepreßt wird, wobei das zerkleinerte Gut vor dem Pressen befeuchtet wird. Vorzugsweise werden dem Wasser sowohl farbzersetzende als auch bakterizide Stoffe und gegebenenfalls Bindemittel zugesetzt. Weiterer Gegenstand dieses Standes der Technik ist eine entsprechende Einrichtung zur Durchführung des vorgenannten Verfahrens. Diesem Stand der Technik liegt die Aufgabe zugrunde, ein Verfahren und eine Einrichtung der vorgenannten Art zu schaffen, mit welchen sich das zerkleinerte Gut sehr dicht zusammenpressen und in dieser gepreßten Form auch halten läßt, so daß eine weitere Behandlung erleichtert wird. Hierdurch wird das erfindungsgemäße Verfahren und die entsprechende Einrichtung nicht nahegelegt, deren Ziel es vielmehr ist, ein Verfahren zur Aufbereitung von Altpapier ohne Einsatz von Bioziden und auch weitgehend frei von sporenbildenden Mikroorganismen und mit geringer Gesamtkeimzahl zur Verfügung zu stellen.

Die US-A-5 324 432 betrifft ein Verfahren zur Inhibierung des Wachstums von filamentös wachsenden Bakterien in industriellen Prozeßwässem, bei dem den Wässern zusammen mit einem Biozid ein Proteaseenzyms in solcher Menge zugeführt wird, daß im Zusammenwirken der Komponenten eine Abtötung der Bakterien erreicht wird. Als Prozeßwasser dienen vorzugsweise Prozeßwässer der Pulpe- und Papiermühlenindustrie. Diesem Stand der Technik liegt die Aufgabe zugrunde, den Bakterienanteil in industriellen Prozeßwässem durch die Zugabe eines Biozids sowie eines Enzyms zu erniedrigen. Hierdurch ist es insbesondere möglich, das Bakterium Sphaerotilus natans deutlich zu reduzieren. Durch diesen Stand der Technik wird allerdings der Gegenstand der vorliegenden Erfindung, wie beansprucht, nicht nahegelegt, nämlich ein Behandlungsverfahren von Altpapier ohne Einsatz von Bioziden bereitzustellen, bei der ein Verfahrensprodukt mit einer sehr geringen Keimzahl erhalten wird.

Die WO-A-92/18638 betrifft ein Verfahren zur Hydrolyse von wasserunlöslichen Estem in Gegenwart einer speziellen Lipase bei dem diese bei einem sauren pH-Wert in Gegenwart eines Aluminiumsalzes umgesetzt werden. Vorzugsweise wird das vorgenannte Ester-Hydrolyse-Verfahren während eines Pulpe- oder Papierherstellungsprozesses eingesetzt. Diesem Stand der Technik liegt die Aufgabe zugrunde, durch den Zusatz von Chemikalien die Hydrolyserate von Estern in Gegenwart von Lipasen zu steigern. Hierdurch wird der Gegenstand der vorliegenden Erfindung, wie beansprucht, nicht nahegelegt, nämlich ein Aufbereitungsverfahren für Altpapier bereitzustellen, welches ein Verfahrensprodukt mit einer nur geringen Keimzahl aufweist.

Die DE-A-37 41 583 betrifft ein Verfahren zur Vernichtung Präzipitate verursachender, schleimbildender und/oder die Qualität von Lebensmittelpapier beziehungsweise -karton beeinträchtigenden Mikroben in den Fabrikationswässern von Papierfabriken, wobei dem Fabrikationswasser der Papierfabrik ein lytisches Enzym mit die Mikrobenzellwände zerstörender Glucanase- und Proteaseaktivität zugesetzt wird. Mit Hilfe dieses Verfahrens und des hierin eingesetzten Enzympräparates kann das Wachstum von Aspergillus niger, also einem in der Papierindustrie allgemein üblich auftretenden Schimmelpilz, ebenso verringert werden wie das Wachstum von Bacillus subtilis und der Hefe sp.1696. Hierdurch wird allerdings das erfindungsgemäße Verfahren weder vorbeschrieben noch nahegelegt, weil dieser Stand der Technik eine völlig andersartige Aufgabenstellung beschreibt.

Die Publikation von T. Yoda, M. Tsutoma und M. Osamu, Herstellung von Papierfasern aus kommunalen Abfällen, im Konferenzbericht Recycling Berlin 1979, Berlin, Seite 1299 bis 1304, betrifft ein Verfahren zur Wiedergewinnung von Papierfasern durch ein Naßverfahren, in dem das Produkt, welches mit Colibakterien (fälschlich Kohlebakterien) in einer Größenordnung von 10⁶ Keimen pro Gramm Material verunreinigt ist, mit Hilfe von Hypochloriten die Anzahl dieser Colibakterien auf 10³ pro Gramm Material reduziert werden kann. Das im Rahmen der Sterilisation und der gleichzeitigen Bleichung durch Hypochlorite erhaltene Material wird aus Ausgangsstoffen wie Zeitungs- und Magazinpapier, Wellpappe und Schreibpapier oder weißem Karton erzeugt und kann zu einem Faserstoff weiterverarbeitet werden, der für die mittlere und untere Lage bei weißem Karton und Wellpappen zusammen mit anderen Fasern eingesetzt werden könnte, gegebenenfalls kann dieser Faserstoff auch für geringwertigeres Schreibpapier und Toilettenpapier eingesetzt werden. Durch dieses Verfahren wird allerdings weder vorbeschrieben noch nahegelegt, wie man zum entsprechenden erfindungsgemäßen Verfahren gelangt.

Der Aufsatz in der Zeitschrift Paper, vom 10. Juni 1985, Nr. 10, Band 203, beschreibt auf den Seiten 23 bis 29 eine Aufbereitung von Fasern bei einer Reihe von österreichischen und deutschen Unternehmen der Papierindustrie. Stellvertretend wird auch das Recycling bei der österreichischen Firma Neupack mittels einer thermischen Behandlung des Altpapierausgangsstoffs bei 90 °C sowie bei der deutschen Firma FS Karton mit einer Wasserdampfbehandlungseinheit bei einer Temperatur von 140 °C beschrieben, die alle Bakterien abtötet, wobei allerdings nicht von bakteriellen Sporen gesprochen wird. Neben diesen punktuellen Angaben finden sich in diesem Stand der Technik keine Hinweise, aus denen das erfindungsgemäße Verfahren nahegelegt wird. Insbesondere werden keine Hinweise gegeben, daß die Temperaturerhöhung gezielt zur Induktion der Induktion der Sporenkeimung eingesetzt wird, wie dies im erfindungsgemäßen Verfahren erfolgt.

Die Monographie "Möglichkeiten der Verwendung von Faserstoff aus Hausmüll bei der Papier- und Kartonherstellung" von H. Stark, Band 2, Berlin, Seite 1145 bis 1152, betrifft Laboruntersuchungen sowie einen Großversuch mit Müllaltpapier zur Herstellung eines gestrichenen Graukartons geringer Qualität mit 350 g/m² flächenbezogener Masse. Im Rahmen dieses Prozesses erfolgt nach der Eindickung auf 30% eine Dispergierung bei circa 95°C, wodurch es nachweislich zu einer Verringerung der Bakterienkeimzahl zu über 99% kommt, womit im Fertigkarton nur noch Keime in der Größenordnung zwischen 160 und 85 Keimen pro Gramm Karton vorliegen. Durch diese allgemeinen Ausführungen, die darüber hinaus auch nicht zur Herstellung von Tissuepapier erfolgt sind, wird das erfindungsgemäße Verfahren nicht nahegelegt, insbesondere weil bei diesem noch bedeutend geringere Keimzahlen erhalten werden, ohne hierbei ein zusätzliches Biozid einzusetzen.

Die Publikation "Research into the hygienic qualities of paper recovered by mechanical sorting of municipal waste" von H. W. Kindler, veröffentlicht in Recycling World Congress 1, Basel, 1978, Paper 2/4, betrifft ein Aufbereitungsverfahren der Firma Escher Wyss, bei dem Papierfasern aus einem Altpapierausgangsstoff zum Recycling verwendet werden. Das Verfahren der Faserproduktion besteht aus den Schritten des Auflösens von Altpapierteilchen in einem Pulper, der Zufügung von Frischwasser und eines Siebpresseffluents, gefolgt von einer Behandlung an - beziehungsweise in einem Zwischenbehältnis - einer Reinigungsvorrichtung, einem Zerfaserungsgerät, einem zentralen Reinigungsgerät, einem Vibrationsrahmen, einer Entwässerung auf einem doppelten Maschennetz, der Erhitzung des krümeligen Materials um bis zu 90°C vermittels 162 °C heißen Wasserdampfs in einer Heizschnecke, um die Schmutzpartikel zu plastifizieren und den Bakterienanteil zu reduzieren, gefolgt von einem Screening der Fasern in einem Disperser und einem Austrag des Materials an eine Papierfabrik bei 45 °C. Durch diese Schrittfolgen wird allerdings das erfindungsgemäße Verfahren weder vorbeschrieben noch nahegelegt, insbesondere werden auch keine Angaben darüber gemacht, ob der Bakterienanteil, insbesondere aber der Anteil an zur Sporenbildung befähigten Mikroorganismen, auf Keimzahlen von weniger als 100 Kolonien bildende Einheiten pro Gramm Produkt reduziert werden kann.

Das Jahrbuch 1993 der Papermakers Conference beschreibt in einem Artikel von J. M. Clément das neue JMC-Verfahren, bei dem eine Dekontaminierung eingesetzt wird, um kontaminierende Stoffe, wie Leime und Hot melts, zu entfernen. In diesem Artikel findet man allerdings keine Hinweise darauf, daß im Rahmen der Aufbereitung des Altpapiers keine Biozide eingesetzt werden und gleichzeitig ein Produkt mit einer nur geringen Keimzahl erhalten wird.

Aus der EP-A-0568404 und dort insbesondere der Zusammenfassung, Abb. 4 und Seite 6, Zeilen 15 bis 42 ist ein Behandlungsverfahren zur Aufbereitung von Altpapier für die weitere Herstellung von Tissueprodukten und eine hierzu verwendbare Vorrichtung gemäß Fig. 4 bekannt, die geeignet zur Durchführung des Verfahrens des Anmeldungsgegenstandes sind, die eine Behandlung des Altpapierausgangsstoffes in einer wasserhaltigen Umgebung (Aktivierung); eine Weiterbehandlung, beispielsweise eine Flotation, gefolgt von einer Heißdispergierung und Aufarbeitung zu einem Tissueprodukt allerdings ohne den entsprechenden Keimungs- bzw. Temperungsschritt der Sporen bekannt, ebensowenig wie die hierbei entstehenden Gesamtkeimzahlen und die Oberflächenkeimzahlen.

Der DE-A-4318431 ist ein Verfahren zur Aufbereitung von beschichtetem Altpapier insbesondere Flüssigkeitskarton vorbeschrieben, wobei das beschichtete Altpapier in einem Prozeß der Stoffbehandlung trocken oder mit einer Konsistenz zwischen 5 und 20 Prozent einer thermischen Behandlung über eine bestimmte Zeitdauer unterzogen wird.

Die DE-A-2240726 offenbart ein Verfahren und Gemisch zum Herstellen von Faserbrei aus regeneriertem Altpapier durch Zerkleinern und Verkochen einer chemischen Lösung mit einer speziellen Alkalimetallsalzkomponente mit der Maßgabe, daß die Chemikalien im Festzustand in der Lösung mit etwa 1 Gew.-% gelösten Feststoffchemikalien auf 10 bis 30 Gew.-% Teilen Papier enthalten sind, desweiteren das chemisch behandelte Papier von der Lösung getrennt wird, das Papier mit Wasser ausgewaschen wird, das ausgewaschene Papier aufgelöst und der ausgewaschene Faserbrei mit einem chemischen Bleichmittel bei einer Temperatur von etwa 38 °C bis 60 °C gebleicht und sodann der gebleichte Faserbrei mit Wasser ausgewaschen wird.

Die EP-A-0557651 betrifft ein Altpapieraufbereitungsverfahren, welches gemäß einziger Figur in Verbindung mit der Figurenbeschreibung zwar ebenfalls ein Altpapier liefert, allerdings unter Verwendung andersartiger Schritte und unter Verwendung der Chlorbleiche, die erfindungsgemäß ja ausgeschlossen werden soll.

Die EP-0653510 A2 betrifft ein Verfahren zum Aufbereiten, insbesondere Reinigen nach dem Auflösen von Altpapier mit Vorreinigung oder Vorsortierung sowie zumindest Dispergierung eines Teils des Altpapiers sowie Flotation oder Wäsche desselben. Dies geschieht in der Weise unmittelbar nach der Grobreinigung / Vorsortierung in einem Siebkorb-Druck-Feinsortierer mit einer Schlitzweite des Siebkorbes von höchstens 0,15 mm bewirkte Bereitstellung eines hinsichtlich Feinsortierung endgültig gereinigten Stoffs als Durchlauf des Drucksortierers und Weiterführung des besonders stark verunreinigten Überlaufanteils des Drucksortierers mindestens zu einer Entwässerungsstufe nachgeschalteten Dispergierstufe und nachfolgende Flotation und/oder Waschstufe.

Der Artikel von G. W. Gove und J. J. McKeown in Tappi, Heft November 1975, Band 58, Seite 121 gibt eine Übersicht über die Entsorgungspraxis bei der Altpapieraufbereitung. Dieser allgemeine Artikel gibt allerdings keine Hinweise darauf, wie im Rahmen der Aufbereitung von Altpapier vorzugehen wäre um ohne Einsatz von Bioziden ein weitgehend von sporenbildenden Mikroorganismen freies Verfahrenserzeugnis zu erhalten.

Der Aufsatz von S. J. Poock in Tappi Journal, August 1985, Seite 78 ff. betrifft die mikrobielle Kontamination bei dem Einsatz von Stärke im Rahmen der Papierherstellung. In diesem Zusammenhang wird insbesondere darauf hingewiesen, daß in diesem Falle Biozide eingesetzt werden sollen. Insofern wird durch diesen Stand der Technik weder vorbeschrieben noch nahegelegt, im Rahmen eines Verfahrens zur Aufbereitung von Altpapier keine Biozide einzusetzen und dennoch ein extrem keimarmes Verfahrensprodukt zu erhalten.

Der Aufsatz von W. Salzburger at al. "Das Cell'link-Konzept zur Optimierung des Chemikalieneinsatzes im Deinking-Prozeß", veröffentlicht im Wochenblatt für Papierfabrikation, Band 13, 1996, Seite 592 f, beschreibt ein neues Verfahren, womit eine optimale Ausnutzung der Deinkingchemikalien Peroxid, Natronlauge und Wasserglas erreicht wird. Hierdurch kommt es zu einer gezielten Chemikalieneinsparung, die einen Einfluß auf den Weißgrad und den Restperoxidgehalt des deinkten Recyclingstoffs hat. Hierdurch wird allerdings weder vorgeschrieben noch nahegelegt, im Rahmen eines Verfahrens zur Aufbereitung von Altpapier keine Bioxide, Chlorverbindungen, Wasserstoffperoxid und/oder Peressigsäure einzusetzen um zu einem weitgehend keimfreien Verfahrensprodukt zu gelangen.

Das Altpapierausgangsprodukt enthält neben üblichen vegetativen Lebensformen von Mikroorganismen Sporen (Dauerformen) sporulierender Mikroorganismen.

Der vorliegenden Erfindung liegt die Aufgabe zugrunde, ein Verfahren zur Aufbereitung von Altpapier zu Pulpe, Rohtissue und Tisueprodukten ohne Einsatz von Bioziden und Chlorverbindungen sowie unter weitgehender Vermeidung von Wasserstoffperoxid und/oder Peressigsäure bereitzustellen, welches weitgehend frei ist von sporenbildenden Mi-kroorganismen mit den Verfahrenschritten gemäß Oberbegriff von Anspruch 1. Bei der erfindungsgemäßen Altpapieraufbereitung kommt es zusätzlich zur Zerfaserung und Reinigung zu einer Minimierung der mikrobiellen Kontamination des eingesetzten Altpapiers.

Diese Aufgabe wird erfindungsgemäß dadurch gelöst, dass nach der Behandlung des Altpapierausgangsstoffs eine Keimung der Sporen und nach der Heißdispergierung eine Temperung erfolgt.

Die vorliegende Erfindung betrifft somit ein Verfahren zur Aufbereitung von Altpapier zu Pulpe, Rohtissue und Tissueprodukten ohne Einsatz von Bioziden und Chlorverbindungen, unter weitgehender Vermeidung von Wasserstoffperoxid und / oder Peressigsäure mit einer Gesamtkeimzahl kleiner 1000 KBE/g und einer Oberflächenkeimzahl kleiner 20 KBE/dm². enthaltend die folgenden Verfahrensschritte:
- eine Behandlung des vorsortierten, gegebenenfalls vorzerkleinerten, Altpapierausgangsstoffs in einer wasserenthaltenden Umgebung zur Aktivierung der Mikroorganismensporen,
- eine Weiterverarbeitung des gekeimte Sporen enthaltenden Altpapierausgangsstoffs, vorzugsweise in wenigstens einer Sortierstufe in an sich bekannter Weise bei Temperaturen oberhalb der Raumtemperatur (20 bis 70°C), umfassend gegebenenfalls eine Vorsortierung, eine Flotation, eine Feinsortierung, eine Wäsche, eine Eindickung, unter Rückführung des abgetrennten und entstofften Klarwassers bis zur Auflösungsstufe,
- gefolgt von einer Heißdispergierung des weiterverarbeiteten Altpapierausgangsstoffs in einer Wasserdampfatmosphäre bei Atmosphärenüberdruck und
- Aufarbeitung in an sich bekannter Weise zu einer weitgehend sporenfreien Recycling Pulpe, daraus zu einem weitgehend sporenfreiem Recycling-Rohtissue und daraus zu einem für den Verbrauch geeigneten endfertigen Tissueprodukt,
- welches dadurch gekennzeichnet ist, dass nach der Behandlung des Altpapierausgangsstoffs eine Keimung der Sporen und nach der Heißdispergierung eine Temperung erfolgt.

Die vorgenannte Temperung sollte im allgemeinen wenigstens 120 Minuten dauern.

Nach einer bevorzugten Ausführungsform des erfindungsgemäßen Aufbereitungsverfahrens findet als sporenaktivierende Behandlung eine thermische Behandlung, eine Behandlung mittels Ultraschall, mittels Lichtwellen, insbesondere Ultraviolettlicht oder eine entsprechende enzymatisch oder chemische Behandlung statt.

Nach einer weiteren bevorzugten Ausführungsform des erfindungsgemäßen Verfahrens setzt man als wasserenthaltende Umgebung des Altpapierausgangsstoffs einen in Wasser dispergierten Altpapierausgangsstoff ein.

Nach einer weiteren bevorzugten Ausführungsform beträgt die Restfeuchte des Altpapierausgangsstoffs 5 bis 15 Gew.-%, vorzugsweise 7 bis 13 Gew.-%, und insbesondere 9 bis 10 Gew.-%. Unter der Restfeuchte, im Sinne der vorliegenden Erfindung, versteht man den prozentuellen Gehalt an Wasser im Altpapierausgangsstoff.

Diesem, in Wasser dispergiertem Altpapierausgangsstoff, können weiterhin übliche Hilfs- und Zusatzstoffe, wie bis zu 2 Gew.-% Natriumhydroxid, bis zu 3 Gew.-% Wasserglas, Deinkinghilfsstoffe, wie Seifen, Enzyme oder Tenside in Mengen bis zu 2 Gew.-% sowie übliche Komplexbildner in Mengen bis zu 2 Gew.-%, bezogen jeweils auf atro-Ausgangsstoff, zugesetzt werden. "Atro-Ausgangsstoff" Begriff: siehe DIN 6730 1996-05.

Nach einer weiteren bevorzugten Ausführungsform erfolgt die anschließende Keimung der Sporen über einen Zeitraum von 60 bis 120 Minuten, vorzugsweise 70 bis 100 Minuten, bei Temperaturen von 20 bis 70 °C, vorzugsweise 30 bis 60 °C. Hier beträgt die Stoffdichte 1 bis 10 Gew.-%, vorzugsweise 3 bis 5 Gew.-%.

Nach einer weiteren bevorzugten Ausführungsform des erfindungsgemäßen Aufbereitungsverfahrens führt man die daran anschließende Heißdispergierung in einer Wasserdampfatmosphäre oberhalb atmosphärischen Drucks, vorzugsweise bei einem Druck von 0,1 bis 4 bar, insbesondere 1,2 bis 1,6 bar, durch. Hier beträgt die Stoffdichte 15 bis 50 Gew.-%, vorzugsweise 25 bis 35 Gew.-%.

Nach einer weiteren bevorzugten Ausführungsform führt man die Heißdispergierung bei Temperaturen von 100 bis 140 °C, vorzugsweise bei 110 bis 130 °C, insbesondere bei etwa 121 °C, für eine zur Abtötung der ausgekeimten Mikroorganismen (Sterilisation) in der Mischung ausreichenden Zeit, aus.

Nach einer weiteren bevorzugten Ausführungsform des erfindungsgemäßen Aufbereitungsverfahrens für Altpapier führt man im Anschluß an die Heißdispergierung eine thermische Behandlung (Temperung) für eine Zeit von wenigstens 120 Minuten bis 240 Minuten, vorzugsweise 150 bis 180 Minuten, durch. Hier beträgt die Stoffdichte 5 bis 16 Gew.-%, vorzugsweise 10 bis 14 Gew.-%. Bei dieser thermischen Behandlung werden üblicherweiseTemperaturen von etwa 50 bis 90 °C, vorzugsweise 60 bis 85 °C, und insbesondere 70 bis 80 °C, eingesetzt.

Bei den vorgenannten sporulierenden Mikroorganismen handelt es sich vorzugsweise um Dauerformen von Algen, Pilzen und/oder Bakterien, welche sich durch die Ausbildung von Endosporen von den üblichen vegetativen Lebensformen der Mikroorganismen unterscheiden. Bei den häufig vorkommenden vegetativen Zellen handelt sich üblicherweise um Pseudomonaden verschiedenster Arten, im Altpapierausgangsstoff liegen diese üblicherweise in einer Menge von 10⁵ - 10⁷ KBE/g vor. Darüber hinaus findet man in Altpapierausgangsstoffen üblicherweise Bacillacea-Arten, die in Keimzahlen zwischen 10³ und 10⁴ KBE/g vorliegen. Die Gesamtkeimzahl liegt natürlich mehrere Zehnerpotenzen höher. Diese Bakterien überstehen durch die Ausbildung hoch hitzeresistenter Sporen bei den Verfahren des Standes der Technik den Gang durch die Trockenpartie, beispielsweise einer Papier- oder Tissuepapiermaschine. Darüber hinaus findet man in Altpapierausgangsstoffen auch Schimmelpilzsporen, die allerdings nur dann einen Beitrag zur mikrobiologischen Belastung mit sich bringen wenn die Produktion im neutralen oder im schwach sauren pH-Bereich stattfindet. Weiterhin findet man im Einzelfall Hefen mit Keimzahlen zwischen 10⁴ und 10⁸ KBE/g und schließlich in manchen Systemen auch anaerobe Mikroorganismen, wie bwz. Sulfatreduzierer. In Einzelfällen können sich in anaeroben Zonen schließlich noch anaerobe, sporenbildende Bakterien, zum Beispiel Clostridien, anreichern.

Nach einer weiteren bevorzugten Ausführungsform setzt man als Altpapierausgangsstoff, der nach den einzelnen Komponenten bereits vorsortiert ist und ausgewählt ist aus untere Sorten, mittlere Sorten, bessere Sorten und krafthaltige Sorten im Sinne der europäischen Norm EN 643 ein.

Unter untere Sorten im Sinne der vorgenannten Norm, die erfindungsgemäß eingesetzt werden können, versteht man ein orginal gemischtes Altpapier, ein gemischtes Altpapier und Pappe (unsortiert), ein sortiertes gemischtes Altpapier und Pappe, Kartonabschnitte, Kaufhausaltpapier, Wellpappe, Wellpappenspäne (neu), Illustrierte Zeitschriften und Magazine, illustrierte Broschüren ohne Kleberücken, Zeitungen und Broschüren (gemischt), Zeitungen und Broschüren ohne Kleberücken (gemischt), Broschüren und Magazine (gemischt) sowie zerrissenes Büropapier (gemischt).

Unter mittlere Sorten im Sinne der vorgenannten europäischen Norm, die erfindungsgemäß eingesetzt werden können, versteht man alte Zeitungen, Zeitungen, Remittenden, Abschnitte von mehrlagigem Karton mit einer weißen Lage, gemischtfarbige Späne, Illuspäne, Illuspäne (kleberückenfrei), bunte Akten, Bücher ohne Deckel (holzfrei), Bücher, Schwerdruck, weiße Selbstdurchschreibepapiere, farbige Selbstdurchschreibepapiere, gebleichter beschichteter Polyethylenkarton, polyethylenbeschichteter Karton sowie durchgehend holzhaltiges Büropapier.

Unter bessere Sorten im Sinne der vorgenannten Verordnung, die erfindungsgemäß eingesetzt werden können, versteht man hellbunte gemischte Druckspäne, hellbunte gemischte Druckspäne (holzfrei), Druckkarten (gemischtfarbig), ungepreßtes, bedrucktes, holzfreies, weißes Büropapier, Lochkarten (chamoisfarbig), weiße Akten (gemischt), weiße Akten (holzfrei), weiße Endlosformulare (holzfrei), weiße Endlosformulare (holzfrei, nicht färbend), weißer mehrlagiger Karton mit Andruck, weißer mehrlagiger Karton (unbedruckt), weißes Zeitungsdruckpapier, weißes Illustrierten-Druckpapier, gestrichene Papiere (weiß, holzhaltig), gestrichenes Papier (weiß, holzfrei), weiße, holzhaltige Späne, weiße Späne (gemischt), weiße Späne (holzfrei) sowie weiße Späne (holzfrei, ungestrichen).

Unter krafthaltigen Sorten im Sinne der vorgenannten Verordnung, die erfindungsgemäß eingesetzt werden können, versteht man braune Wellpappe, Kraftwellpappe II, Kraftwellpappe I, Kraftpapiersäcke (gebraucht), Kraftpapiersäcke (gebraucht, sauber), Kraftpapier (gebraucht) sowie Kraftpapier (neu). Auch beliebige Mischungen der vorgenannten Bestandteile der jeweiligen Gruppe können erfindungsgemäß eingesetzt werden.

Nach einer weiteren bevorzugten Ausführungsform geschieht die Aufarbeitung des Altpapierausgangsstoffs über die Zwischenstufe einer weitgehend sporenfreien Recycling-Pulpe zu dem weitgehend sporenfreien Recycling-Rohtissue in an sich bekannter Weise, ebenso in an sich bekannter Weise in einer Weiterverarbeitung beispielsweise zu entsprechenden Tissuepapiererzeugnissen, vorzugsweise in Form von ein- oder mehrlagigen oder -schichtigen Falzprodukten und/oder Rollenprodukten, beispielsweise Toilettenpapier, Küchenpapier, Servietten, Taschen-, Kosmetik-, Hand-, Putz- und Wischtücher.

Weiterer Gegenstand der vorliegenden Erfindung ist eine Vorrichtung zur Durchführung des vorgenannten Aufbereitungsverfahrens für Altpapier, umfassend im wesentlichen ein Auflöseaggregat 2, gegebenenfalls eine Bütte beziehungsweise eine Ableerbütte 3, weitere übliche Sortierstufen in Form einer Vorsortierungseinrichtung 5, einer Flotationseinrichtung 8, einer Reinigungseinrichtung 10, einer Feinsortiereinrichtung, einer Wascheinrichtung sowie einer Eindickungseinrichtung 14, gefolgt von einer Druckdispergierungseinrichtung 15 (Heißbehandlungsstufe), Stapeleinrichtung mit Tempervorrichtung 17 gefolgt von einer Stoffverdünnungsvorrichtung mittels Papiermaschinenrückwasser, Weiterbearbeitungseinrichtungen wie beispielsweise Stapelbütten oder --türme und Trocknungseinrichtungen zur jeweiligen Recycling-Pulpe 18 oder zu Recycling-Faserstoff 25 in Platten- oder Ballenform.

Des weiteren können noch Maschinen zur weitergehenden Stoffreinigung und -Bleiche in der Altpapieraufbereitungsanlage vorhanden sein. Diese Maschinen können in ihrer Reihenfolge je nach geforderten Stoff- bzw. Qualitätseigenschaften verändert aufgestellt und betrieben werden.

Weiterer Gegenstand der vorliegenden Erfindung ist ein Tissuepapiererzeugnis in Form von Rohtissuepapier oder als ein für den Verbrauch geeignetes endfertiges Tissueprodukt mit einer Gesamtkeimzahl von weniger als 1000 KBE/g und einer Oberflächenkeimzahl von weniger als 20 KBE/dm², der nach den vorbeschriebenen Verfahren erhalten werden kann.

Dies geschieht in an sich bekannter Weise, indem die Recycling-Pulpe beispielsweise entweder direkt einer Anlage zur Rohtissuepapierherstellung zugeführt wird oder alternativ entwässert, zwischengelagert als Recycling-Faserstoff in Platten- oder Ballenform, beispielsweise durch Trocknung auf einen 10 %igen Restfeuchtegehalt und anschließend wiederum einer Rohtissuepapiererzeugungsanlage zugeführt wird, bestehend aus einem sogenannten Konstant-Teil und der eigentlichen Rohtissueerzeugungsmaschine, beispielsweise einer konventionellen "Yankee-Maschine" oder einer Durchströmtrocknungstissuemaschine (TAD - Through Air Drying).

In einer der Rohtissueerzeugung nachgeschalteten Hygienepapierverarbeitungsanlage entsteht dann ein für den vorgenannten endfertigen Verbrauch geeignetes Tissueprodukt, indem aus einer oder mehreren ein- oder mehrlagigen Mutterrolle(n) des Rohtissuepapiers, dieses alternativ auf Falz- oder Rollenautomaten zum Tissueendprodukt konfektioniert wird. Hierbei versteht es sich von selbst, daß im Rahmen des Weiterverarbeitungsprozesses keine Hilfsmittel, welche die Keimzahlen im fertigen Tissueprodukt erhöhen, eingesetzt werden. Hierauf ist insbesondere bei der Verwendung von Leim, Lotionen und sonstigen Komponenten zu achten, die gegebenenfalls für eine Mikobiologie anfällig sein könnten.

Unter Biozid im Sinne der vorliegenden Erfindung versteht man übliche Umweltchemikalien, insbesondere in der Papierindustrie eingesetzte Umweltchemikalien, die zur Bekämpfung schädlicher Kleinstlebewesen, insbesondere Mikroorganismen eingesetzt werden. Die primäre Wirkung vieler Biozide ist selektiv für einzelne Gruppen von Mikroorganismen, häufig jedoch können sich derartige Biozide, wie beispielsweise, das zu den organischen Chlorverbindungen zählende DDT über Nahrungsketten auch in anderen, von den eigentlichen Zielgruppen verschiedenen Arten anreichern und so zur chronischen oder zur akuten Gefährdung weiterer Gruppen einer Lebensgemeinschaft führen. Typische in der Papierindustrie eingesetzte Biozide sind beispielsweise: Natriumchlorid, Natriumperoxyd, Natriumhydrogensulfit, 1.4-Bis(bromacetoxy)buten, Tetramethylthiuramdisulfid, 3,5-Dimethyl-tetrahydro-1.3.5-thiadiazin-2-thion, Bromhydroxyacetophenon, Dinatriumcyanodithioimidocarbonat, Kalium-N-methyldithiocarbamat, N-(2-p-Chlorbenzoylethyl)-hexaminiumchlorid, Methylen-bisthiocyanat, Kalium-N-hydroxymethyl-N'-methyldithiocarbamat, Natrium-2-mercaptobenzothiazol, Natriumhexafluorosilikat, 2-0xo-2(4-hydroxy-phenyl)-acethydroximsäurechlorid, N-[α-(1-Nitroethyl)benzyl]-ethylendiamin, 2-Brom-2-nitropropandiol(1.3), wäßrige Lösung von p-Hydroxybenzoesäureester (Methyl-, Ethyl- und n-Propylester der p-Hydroxybenzoesäure sowie deren Natriumsalze) in Wasserstoffperoxid (35 Gew.-%), Mischungen aus 5-Chlor-2-methyl-4-isothiazolinon-3-on und 2-Methyl-4-isothiazolin, Mischungen aus Tris-(hydroxymethyl)nitromethan aus 5-Chlor-2-methyl-4-isothiazolinon-3-on und 2-Methyl-4-isothiazolin, Mischung aus N.N'-Dihydroxymethylenhamstoff und 1.6-Dihydroxy-2.5-dioxahexan und 5-Chlor-2-methyl-4-isothiazolinon-3-on und 2-Methyl-4-isothiazo-linon-3-on, 2.2-Dibrom-3-nitril-propionamid, Mischung aus Phenyl-(2-chlor-2-cyanvinyl)sulfon und Phenyl-(1.2-dichlor-2-cyanvinyl)sulfon und 2-Phenyl-sulfonylpropionitril, 1.2-Benzisothiazolin-3-on und Mischungen aus den vorangegan-genen Produkten, Sorbinsäure, p-Hydroxybenzoesäureethyl- und / oder -propylester, Ameisensäure, Benzoesäure, Addukt aus 70 % Benzylalkohol und 30 % Formaldehyd.

Unter Chlorverbindungen versteht man sowohl anorganische als auch organische entweder Chlor enthaltende oder Chlor abspaltende Chemikalien, wie sie üblicherweise insbesondere in der Papierindustrie eingesetzt werden. Dies sind beispielsweise Alkalihypochloride, Erdalkalihypochloride, Chlor und Chlordioxid.

Die vorliegende Erfindung wird nachfolgend durch Ausführungsbeispiele in Form von Zeichnungen näher erläutert. Es zeigen:
- Figur 1:: Eine detaillierte Altpapierausgangsstoffverarbeitung gemäß der Erfindung.
- Figur 2:: Die wesentlichen Verfahrensschritte der Erfindung.

In einem typischen Verfahrensablauf des erfindungsgemäßen Behandlungsverfahrens gemäß Figur 1 wird zunächst das vorsortierte Altpapierausgangsprodukt 1 einer Auflöseund Sortiertrommel 2, beispielsweise einer Ahlströmtrommel, zugeführt und dort zusammen mit einem Flotationsmittel, gegebenenfalls in Gegenwart einer Base, wie Natriumhydroxid, für einen Zeitraum von etwa 10 bis 60 Minuten, vorzugsweise 20 bis 25 Minuten bei Temperaturen von 20 bis 70 °C, vorzugsweise 45 bis 60 °C behandelt.

Daraufhin wird das so behandelte Produkt in eine Bütte 3 überführt, die als typische Stoff-Verweilzeit beispielsweise 20 bis 60 Minuten bei Temperaturen von 20 bis 70 °C, vorzugsweise 30 bis 50 °C haben kann.

Im Anschluß daran erfolgt eine Reinigungsstufe durch Kegelschleudern, beispielsweise in einem Dickstoffreiniger 4, in denen eine Abscheidung von spezifisch schwereren Teilchen als die Faser stattfindet, beispielsweise Büro- und Heftklammern.

Die erfindungsgemäße, weitere Verarbeitung als Folge der Vorbehandlung der nun gekeimten Sporen enthaltenden Papierausgangstoffes erfolgt vorzugsweise wie folgt

Nach den Kegelschleudem 4 gelangt das Ausgangsprodukt in eine Lochsortiereinrichtung 5, wo durch Loch- und /oder Schlitzbleche eine Absonderung von unerwünschten Bestandteilen erfolgt. Im Anschluß daran erfolgt ein Übergang in eine Bütte, beispielsweise eine Entstipperbütte 6, die als Tank dient. Im Anschluß daran kann das Ausgangsprodukt gegebenenfalls über einen Entstipper 7 geführt werden, wo ein Auflösen möglicher Faserbündel und Zerkleinern von Druckfarben und Lacksplittern usw. erfolgt. Im Anschluß daran erfolgt eine Flotation in der Flotationsapparatur 8, hier eine Druckfarbenflotation, für eine Zeit von 6 Minuten bei einer Temperatur von 45 °C. Im Anschluß daran gelangt das Ausgangsprodukt in eine Bütte, beispielsweise eine Flotationgutstoffbütte 9, mit einer Verweilzeit von 2 bis 4 Minuten und wird dann für eine Zeit von 1 bis 2 Minuten bei einer Temperatur von 40 bis 45° C in einer Cleaneranlage 10 weiterbehandelt. Daraufhin erfolgt eine weitere Trennung in einer Schlitzsortiereinrichtung 11 bei einer Verweilzeit von 1 bis 2 Minuten. Im Anschluß daran gelangt das Ausgangsprodukt in eine kombinierte Wasch-12 und Eindickstufe 13 + 14 bestehend aus entweder einer Waschvorrichtung 12, beispielsweise einem Scheibenfilter oder dem Variosplit, wobei die übliche Verweilzeit 1 bis 5 Minuten beträgt.

Im Anschluß an diese alternativ einsetzbaren Behandlungsschritte erfolgt eine Überführung in ein Standrohr 13 mit einer Eindickpumpe, hier einer Mittelkonsistenzpumpe (MC-Pumpe). Diese fördert das Ausgangsprodukt in eine Siebbandpresse 14 , wobei diese Behandlung 3 bis 5 Minuten andauert.

Im Anschluß daran erfolgt eine Druckbehandlung mit einer Verweilzeit von 2 bis 8 Minuten, wobei die Temperatur auf 110 bis 130 °C gesteigert wird. In der Heizschnecke und nachfolgenden Dispergiervorrichtung 15 erfolgt diese Druckbehandlung bei 0,75 bis 1,8 bar über die Zeit, die der Stoff für den Durchtritt vom Eingang Heizschnecke bis Ausgang Standrohr 16 nach der Druckdispergierung 15 benötigt. Die Stoffdichte in der Heizschnecke und im Disperger beträgt 15 bis 50 Gew.-%, vorzugsweise 25 bis 35 Gew.-%.

Ab dem Disperger-Auslauf wird nur mehr mit Wasser aus dem Papiermaschinenkreislauf verdünnt Das so behandelte Produkt wird dann über ein Standrohr 16 und die MC-Pumpe in eine Stapeleinrichtung 17, bestehend aus einem Stapelturm und einer Bütte überführt, wo das behandelte Produkt für eine Zeit von 120 bis 240 Minuten, bei einer Temperatur von 60 bis 80 °C, vorzugsweise 70 bis 80 °C, und bei einer Stoffdichte von 8 bis 16 % , vorzugsweise 10 bis 14 % verbleibt und anschließend für eine zusätzliche Zeit dann 10 bis 30 Minuten bei einer Temperatur von 40 bis 45 °C in einer nachfolgenden Mischbütte belassen wird. Dieses Verweilen des Produkts bei erhöhter Temperatur wird als Temperung bezeichnet.

Im Anschluß daran verläßt das so behandelte Produkt als sogenannte Recycling-Pulpe 18 die Mischbütte und wird anschließend in an sich bekannter Weise zu Recycling-Rohtissue 25 und in an sich wiederum bekannter Weise zu Recycling Tissuepapiererzeugnissen für den endfertigen Verbrauch 27 weiterverarbeitet.

Neben dieser Hauptproduktlinie fallen in den Stufen 2, 4 und 5 Vorsortierungsabfälle 19 an, die aus dem Prozeß ausgeschleust werden. Darüber hinaus fallen in den Stufen 8, 10, 11 und 12 weitere unerwünschte Nebenstoffe an, die über eine Bütte, hier Schlammbütte 22 gesammelt und über die Abwasserreinigungsanlage 23 aus dem Prozeß ausgeschleust werden.

Bei dem erfindungsgemäßen Verfahren wird der Altpapierausgangsstoff auf einem Förderband in Ballen oder in loser Form aufgebracht und über eine Ballenbrechereinrichtung, beispielsweise in Form rotierender Schnecken aufgelockert und weiteren Förderbändern, beispielsweise dem Wiegeband und anschließend der nachfolgenden Trommel zugeführt.

Hierbei gelangt der Altpapierausgangsstoff mit einer Restfeuchte von etwa 9 % zunächst in die Auflösetrommel und wird im Einlaufteil der Trommel mit aufgeheiztem Rückwasser aus der Kreislaufreinigung der Altpapieraufbereitung gemischt. Die Temperatur des Wassers beträgt 45 bis 60 °C. Durch Rotation der Trommel wird durch schaufelähnliche Einbauten an den Trommelwänden das Altpapiergemisch gehoben und durch die Aufprallenergie zerfasert. Durch weitere Einbauten, die ein schnelles Durchfließen der Auflösezone verhindern, wird eine definierte Auflösedauer erreicht. Im zweiten Teil der Trommel, dem sogenannten Siebteil, werden alle Teilchen kleiner als 7 mm entsprechend der Trommellochung unter Zugabe von Verdünnungswasser durchgespült. Teilchen, die durch ihre Geometrie diese Lochung nicht passieren können, werden aus dem Prozeß ausgeschieden. In diesem Verfahrensabschnitt wird üblicherweise mit Temperaturen von 20 bis 70 °C, vorzugsweise 50 bis 60 °C, bei einer Durchlaufzeit von 10 bis 40 Minuten, vorzugsweise wenigstens 20 bis 25 Minuten, gearbeitet. Die Stoffdichte im Auflöseteil betrifft üblicherweise 5 bis 40 %, vorzugsweise 15 bis 20 %, und die Stoffdichte im weiteren Siebteil 2 bis 8 %, vorzugsweise 3,5 bis 4,5 %. Der pH-Wert wird üblicherweise auf 5 bis 12, vorzugsweise 7 bis 8, eingestellt.

In der Auflösetrommel werden vorhandene Sporen aktiviert, das heißt, durch Anheben der Temperatur auf die angegebenen Werte werden Bedingungen geschaffen, welche den Keimungsprozeß der mikrobiellen Sporen in Gang setzen und ein nachfolgendes weitgehend quantitatives Auswachsen ermöglichen. Um diese Vorgänge zu sichern, wurde die Länge der Auflösetrommel erhöht. Übliche Auflösetrommeln besitzen eine Verweilzeit von 15 bis 20 Minuten. Durch die verlängerte Ausführung der im erfindungsgemäßen Verfahren eingesetzten Trommel, wird eine Erhöhung der Auflösezeit auf 20 bis 25 Minuten erreicht. Alternativ kann auch ein beliebiger Pulper oder Stofflöser eingesetzt werden, sofeme dadurch die für die Induktion notwendigen Verweilzeiten bei der zur Keimung erforderlichen Temperatur garantiert werden.

Im Anschluß daran gelangt der Altpapierausgangsstoff in eine Bütte beziehungsweise die Ableerbütte, in der ein Rührwerk installiert ist, welches die Stoffsuspension homogenisiert und in Bewegung hält, um das Absetzen von Stoff, verbunden mit dem Entstehen anaerober Zonen, und damit die Anreicherung oder Vermehrung anaerober Bakterien zu verhindern. Weiterhin werden die aktivierten Sporen in eine Keimung- beziehungsweise Auswachsphase überführt. Typische hierfür eingesetzte Prozeßparameter sind Temperaturen von 20 bis 70 °C, vorzugsweise 30 bis 50 °C, insbesondere 45 °C. Die typische Stoffdichte beträgt 2 bis 6 %, vorzugsweise 3 bis 4 %. Als Aufenthaltsdauer sind 20 bis 60 Minuten, vorzugsweise 25 bis 45 Minuten, vorgesehen. Der pH-Wert sollte je nach den vorhandenen Mikroorganismen/Mikroorganismensporentypen zwischen 6 und 8, vorzugsweise um den Neutralbereich, liegen.

Im Anschluß daran folgen eine Reihe von Reinigungs- bzw. Sortierstufen, in denen dem Altpapierfaserstoff unerwünschte Bestandteile wie spezifisch schwerere Teilchen als die Faser, Druckfarbenpartikel, spezifisch leichtere Teilchen als die Faser, Fein- und Füllstoffe sowie flächige und kubische Teilchen mittels einer Siebbarriere mit typischen Lochweite von 1,0 bis 2,4 mm und typischen Schlitzweite von 0,1 bis 0,3 mm entfernt werden. Diese Schritte werden üblicherweise als Vorsortierung, Flotation, Cleanerung, Feinsortierung, Wäsche und Eindickung bezeichnet. Das bei der Eindickung entstehende Filtrat wird über eine Entspannungsflotationsstufe in einer Supercellvorrichtung geführt, wo Feststoffe vom Wasser abgetrennt werden, um das so gereinigte Wasser wieder dem Prozeß zuführen zu können. Typische während dieser Reinigungsstufen eingesetzte Prozeßparameter sind Temperaturen im Bereich von 30 bis 50 °C, vorzugsweise 40 bis 45 °C. Die Stoffdichte nach der Sortierung beträgt ungefähr 0,5 bis 3 %, vorzugsweise etwa 1 Gew.-%, und die Stoffdichte nach der Eindickung steigt auf Werte von 20 bis 40 %, vorzugsweise etwa 35 Gew.-%. Typische Stoffdurchlaufzeiten für diese Prozeßstufen liegen im Bereich von 10 bis 30 Minuten, vorzugsweise etwa 20 Minuten. Der pH-Wert der Reaktionsmischung wird auf Werte von 5 bis 10, vorzugsweise 6,5 bis 8, eingestellt. Beim Durchlaufen der vorgenannten Reinigungsstufen sind die bereits gekeimten und ausgewachsenden Sporen auf mechanische Einflüsse (shear stress) besonders empfindlich. Hierdurch können die Zellwände zerstört und die Bakterien vernichtet werden. Vorhandene aerophile Bakterien können sich weiters an die in der Flotation entstehenden Luftbläschen anlagern und werden über den Flotations-Schaum aus dem Prozeß entfernt. Im Rahmen des Waschschrittes können Bakterien auch mit dem Waschwasser ausgetragen werden, in der nachfolgenden Kreislaufreinigung verbleiben diese im Sediment oder im Flotat und sind somit aus dem erfindungsgemäßen Aufbereitungsverfahren für Altpapier entfernt worden.

Im Anschluß an diese Reinigung erfolgt eine Druckheißdispergierung, wobei sogenannte Schmutzpunkte unter die Sichtbarkeitsgrenze zermahlen und Reste klebender Verunreinigungen inaktiviert sowie schließlich durch den Mahlprozeß eine Festigkeitsaktivierung des Faserstoffs erreicht wird. Typische Prozeßparameter dieser Druckheißdispergierung sind Temperaturen in der Heizschnecke im Bereich von 100 bis 140 °C, vorzugsweise aber mindestens 110 bis 130 °C, bei einer typischen Verweilzeit in der Heizschnecke von 2 bis 8 Minuten, vorzugsweise aber etwa 7 Minuten. Die Temperatur zwischen den Mahlblöcken sollte 115 bis 130 °C, vorzugsweise etwa 121 °C, betragen. Die mechanische Eigenenergie auf den Stoff sollte etwa 40 bis 80 Kwh/to atro Stoff, vorzugsweise etwa 60 Kwh/to atro Stoff, betragen.

Die Stoffdichte liegt im Bereich von 20 bis 40 % Trockengewicht, vorzugsweise aber mindestens 30 % Trockengewicht. Die Druckheißdispergierung, die vorzugsweise in einer Vorrichtung, bestehend aus einer Heizschnecke, wie sie beispielsweise von der Firma Andritz Sprout Bauer, Wien, unter der Bezeichnung "Sprout Bauer Druckdispergieranlage" vertrieben wird. In der vorgenannten Druckheißdispergierung kommt es durch die hohen Temperaturen und den Überdruck zu einer Abtötung noch nicht ausgekeimter restlicher Sporen sowie der bereits ausgekeimten Sporen, beziehungsweise der in vegetativer Form vorliegenden noch verbliebenen Mikroorganismen.

Im Anschluß an diese Druckheißdispergierung erfolgt eine Lagerung (Temperung) der nunmehr in einer Stoffdichte von 5 bis 15 Gew.-%, vorzugsweise um etwa 10 Gew.-% vorliegenden Altpapierfasern bei Temperaturen von 60 bis 80 °C, vorzugsweise im Bereich zwischen 70 und 80 °C, für eine ausreichend lange Zeit, um möglicherweise noch verbliebene intakte vegetativen Bakterien abzutöten, also üblicherweise mit einer Verweildauer von mindestens 100 Minuten, vorzugsweise 2 bis 4 Stunden, und insbesondere etwa 3 Stunden.

Die vorliegende Erfindung wird nunmehr durch Ausführungsbeispiele näher erläutert.

Die Bestimmung der Oberflächenkolonienzahl (OKZ) erfolgte in Anlehnung an die DIN 54378 unter Berücksichtigung der speziellen Gegebenheiten bei Tissuepapieren in der Weise, daß die Anzahl von Kolonien bestimmt werden, die nach einer Bebrütungszeit von 3 Tagen bei einer Temperatur von 25 °C auf umgerechnet 100 cm² des zu untersuchenden Papiers gefunden werden. Die DIN 54378 sieht nur eine Bestimmung der Anzahl an Schimmelpilzen vor, kann aber im Sinne der Bestimmung bei Tissuepapier auch in Verbindung mit anderen Mikroorganismen gemäß nachstehend gemachtem Abkürzungsverzeichnis eingesetzt werden.

Hierzu werden die vorbereiteten Proben in Petrischalen auf ausgegossene Nährböden gegeben und mit sterifem, verflüssigtem Nährboden übergossen und bebrütet Nach Ablauf der Bebrütungszeit werden die Kolonien gezählt und auf 100 cm² Prüffläche umgerechnet.

### Hierzu wurden folgende Geräte eingesetzt:

Ein Brutschrank, der auf eine Temperatur von 25 ± 1 °C regelbar ist, ein Dampfsterilisator für einen Betriebsdruck bis etwa 3,5 bar und eine Sterilisierungstemperatur bis 134 °C. Dieser ist so eingerichtet, daß eine Temperatur von 120 °C ± 2 °C eingehalten werden kann, Einweg-Petrischalen, Durchmesser 97 mm, Schere aus nichtrostendem Stahl, Schablone 50 mm x 50 mm, 2 Pinzetten, eine Dispensette, ein Bunsenbrenner, ein Reinraumarbeitsplatz, ein heizbarer Magnetrührer, eine 500 ml Standflasche mit Gewinde sowie eine Analysenwaage.

Als Prüfmittel diente neben frisch destilliertem Wasser ein Caseinpepton-Sojamehlpepton-Agar, welches von der Firma Merck unter der Bezeichnung Caso-Agar unter der Artikel-Nr. 5458 vertrieben wird. 40 g dieses Agar werden pro 1 Liter Wasser zugesetzt, auf 25 °C erhitzt und anschließend 15 Minuten bei 121 °C sterilisiert. Zur Probenvorbereitung werden etwa 40 Lagen des zu prüfenden Papiers herausgeschnitten und anschließend in den Reinraumarbeitsplatz gelegt.

Die Durchführung selbst erfolgt, indem man zunächst die Dispensette bei 121 °C 15 Minuten sterilisiert wird bzw. bei Serienanalysen genügt es, die Pinzetten und Scheren sowie Schablonen durch Abflammen zu sterilisieren. Daraufhin werden 10 ml des sterilen Nährbodens bei einer Temperatur von 48 °C ± 2 °C mit einer Dispensette in eine Petrischale gegossen. Sofort anschließend wird eine Lage des zu prüfenden schon quadratisch geschnittenen Papiers (5 cm x 5 cm) in den Nährboden gelegt. Nach Erstarren des Nährbodens werden weitere 10 ml hinzugefügt. Die fertigen Petrischalen werden dann 15 Minuten mit dem Deckel nach unten in den Brutschrank gelegt, was ein Auftropfen von Kondenswasser auf die Kulturen verhindert. Die dann folgende Bebrütung der Kulturen erfolgt innerhalb von 3 Tagen bei 25 °C ± 1 °C. Die Auswertung erfolgt nach 3 Tagen durch Auszählen der Kolonien, die auf der obersten Nährbodenschicht auftreten. Der Prüfbericht umfaßt daher das Datum der Probennahme, die Qualität des Papiers, die Papierproduktions- und Rollennummer sowie die Oberflächenkolonienzahl pro 100 cm².

Die Bestimmung der Gesamtkolonienzahl (GKZ) in Anlehnung an die DIN 54379 dient hier zur Bestimmung der GKZ von Tissuepapieren und anderen Substanzen. Weiterhin kann diese Bestimmung auch zur Kontrolle und Wirksamkeit von bakteriziden und fungiziden Zusatzstoffen eingesetzt werden.

Unter der GKZ versteht man die Anzahl der Kolonien, die nach einer Bebrütungszeit von 3 Tagen bei einer Temperatur von 25 °C ± 1 °C in umgerechnet 1 g der luftgetrockneten Probe gefunden werden. Hierzu wird die Probe in ein steriles Proberöhrchen gegeben und mit einer Ringerlösung 30 mal geschüttelt. Ein Teil der Faserstoffsuspension wird in eine Petrischale überführt, mit Nähragar versetzt und bebrütet. Nach Ablauf der Brutzeit im Brutschrank wird die Anzahl der Kolonien bestimmt. Der arithmetische Mittelwert aus zwei Bestimmungen je Probe wird auf 1 g lufttrockene Probe umgerechnet und als Gesamtkolonienzahl angegeben.

Als Geräte werden ebenso wie bei der Bestimmung der Oberflächenkolonienzahl ein Brutschrank, ein Dampfsterilisator, Einweg-Petrischalen, Schere, Pinzetten, Dispensette, Bunsenbrenner, Reinraumarbeitsplatz, heizbarer Magnetrührer, Standflaschen, Analysewaage und zusätzlich Einweg-Meßpipetten mit einer 0,1 ml Graduierung sowie Einweg-Polypropylenröhrchen mit einem Steckverschluß 12 mm eingesetzt.

Die eingesetzten Prüfmittel sind mit den Prüfmitteln zur Bestimmung der Oberflächenkolonienzahl identisch, zusätzlich setzt man eine Ringerlösung aus 8,5 g/l Natriumchlorid (erhältlich von der Firma Merck unter der Artikel-Nummer 841) zusammen mit 1 g/l Pepton (erhältlich von der Firma Merck aus Fleisch peptisch verdaut Artikel-Nummer 7224) ein. Anschließend wird die Lösung 15 Minuten bei 121 °C sterilisiert.

Probenvorbereitung und Durchführung erfolgt in der Weise, daß aus den Probestückchen mit einer sterilen Schere quadratische Stücke mit einer Kantenlänge von etwa 15 mm ausgeschnitten werden. Die Proben dürfen nicht mit den Fingern berührt werden. Je Prüfung sind mindestens 2 Proben von je etwa 1,5 g auszuschneiden. 1,0 g des zu untersuchenden Papiers werden unter sterilen Bedingungen in ein steriles Proberöhrchen eingewogen. Danach wird es mit 10 ml Ringerlösung versetzt und 30 mal geschüttelt. Bei der Entnahme ist dafür zu sorgen, daß möglicherweise abgesetzte Fasern vollständig mit der zur Entnahme bestimmten sterilen Pipette aufgewirbelt werden. Die so erhaltene Basissuspension stellt die Grundlage für weitere Verdünnungen dar. Da nur 30 bis 300 Keime auf eine Platte mit Sicherheit ausgezählt werden können, ist bei höheren Keimzahlen die Basissuspension zu verdünnen bzw. ist bei niedrigeren Keimzahlen die Einlage zu erhöhen. Die Durchführung selbst erfolgt durch Sterilisation der Pinzette, Schere, Dispensette für 15 Minuten bei 121 °C. Daraufhin werden jeweils 1 ml der Basissuspension in eine Petrischale gegeben und mit 10 ml Nähragar von einer Temperatur mit 48 °C ± 2 °C versetzt. Damit der Nähragar gleichmäßig mit der Basissuspension vermischt wird, wird die mit dem Deckel verschlossene Petrischale vorsichtig in Achterschleifen, also nicht kreisförmig bewegt. Die Schalen werden waagerecht abgestellt, bis das Gemisch erstarrt ist. Die gefüllten Petrischalen werden 3 Tage lang bei 25 °C ± 1 °C bebrütet. Die Platten sind so in den Brutschrank zu legen, daß der Deckel nach unten liegt.

Die Auswertung erfolgt in der Weise, daß nach 3 Tagen die Proben aus dem Brutschrank genommen und alle vorhandenen Kolonien gezählt und auf 1 g lufttrockene Probe umgerechnet werden. Hierbei sollte peinlich genau darauf geachtet werden, daß Fasern nicht mit Kolonien verwechselt werden. Der schließlich zu erstellende Prüfbericht umfaßt sowohl das Datum der Probenahme, die Qualität des Papieres, die Papierproduktions- und Rollennummer sowie die Gesamtkolonienzahl, umgerechnet auf 1 g lutro sowie dem entsprechenden Verdünnungsfaktor.

Die Bestimmung der aeroben und anaeroben Sporenzahl erfolgt in der Weise, daß 5 ml einer Aufschlämmung in ein leeres Testbehältnis überführt und dann für 10 Minuten in einem Wasserbad bei 80 °C belassen werden. Diese Maßnahme bewirkt eine Wachstumsaktivierung der Bakteriensporen, wohingegen alle anderen vegetativen Zellen absterben.

Daraufhin erfolgt eine 10fache Serie der Verdünnung und 1 ml von jeder Verdünnung wird auf eine Petrischale überführt. TGE Agar wird zur Bestimmung der aeroben Sporen hinzugefügt und die Agarplatten werden anaerob für 3 Tage bei 30 °C inkubiert. Verstärkter Clostridien Agar (RCA) wird für die anaeroben Sporen eingesetzt und die Agarplatten werden anaerob für 2 Tage bei 37 °C inkubiert.

Das erfindungsgemäße Altpapieraufbereitungsverfahren wurde mit verschiedenen Einstellungen (Versuche 1 bis 6) im Bereiche der kritischen Verfahrensschritte auf seine Wirksamkeit im Hinblick auf die Keimzahlreduktion untersucht. Hierbei wurde im Versuch 1 unter folgenden Produktionsbedingungen gefahren, die Temperatur in der Dispergierung 15 betrug dabei 110 - 112 °C, die Verweilzeit in der Heizschnecke betrug 7 Minuten bei einer Temperatur von 110 - 112 °C, das Niveau im Stapelturm 17 lag bei 70 - 71 % womit sich eine mittlere Verweildauer des Stoffes von 150 Minuten bei 75 °C ±0 °C ergibt.

Im Versuch 2 wurde mit erhöhter Temperatur (121 ° C) in der Dispergierung 15 gefahren, die Verweilzeit in der Heizschnecke betrug 7 Minuten bei einer Temperatur von 121 °C, das Niveau im Stapelturm 17 lag bei 47 - 58 %, womit sich eine mittlere Verweildauer des Stoffes von 120 Minuten bei 79 - 81 °C ergibt

Im Versuch 3 wurde wieder mit erhöhter Temperatur (121 ° C) in der Dispergierung 15 gefahren, die Verweilzeit in der Heizschnecke wurde bei einer Temperatur von 121 °C allerdings von 7 Minuten auf 3,5 Minuten gesenkt, das Niveau im Stapelturm 17 lag bei 77 - 82 %, womit sich eine mittlere Verweildauer des Stoffes von 165 Minuten bei 78 - 81 °C ergibt.

Im Versuch 4 wurde wieder mit erhöhter Temperatur (121 ° C) in der Dispergierung 15 gefahren, die Verweilzeit in der Heizschnecke betrug 7 Minuten bei einer Temperatur von 121 ° C, das Niveau im Stapelturm 17 wurde stark abgesenkt und lag bei 33 - 39 %, womit sich eine mittlere Verweildauer des Stoffes von 90 Minuten bei 75 - 77 °C ergibt.

Im Versuch 5 wurde im Vergleich zum Standard mit niedrigerer Temperatur (90° C) in der Dispergierung 15 gefahren, die Verweilzeit in der Heizschnecke betrug 6 Minuten bei einer Temperatur von 90 ° C, das Niveau im Stapelturm 17 lag bei 59 - 68 %, womit sich eine mittlere Verweildauer des Stoffes von 135 Minuten bei 62 - 63 ° C ergibt.

Im Versuch 6 wurde im Vergleich zum Standard wieder mit niedrigerer Temperatur (90 ° C) in der Dispergierung 15 gefahren, die Verweilzeit in der Heizschnecke betrug 6 Minuten bei einer Temperatur von 90 ° C, das Niveau im Stapelturm 17 lag bei 69 - 85 %, womit sich eine mittlere Verweildauer des Stoffes von 150 Minuten bei 50 - 61 °C ergibt.

Die Temperatur im Auflöseaggregat, sprich der Ahlström Trommel 2 wurde bei allen Versuchen V1-V6 konstant bei 50 °C eingestellt. Ein Unterschreiten von dieser Temperatur hat nichtsynchrone und unvollständige Auskeimung zur Folge. Dies stützt sich auf den Stand der Lehrmeinung.

Weiters wurde wie im erfindungsgemäßen Verfahren beschrieben, auf den Einsatz von Bioziden verzichtet.

Während der Versuchsläufe wurden zeitlich versetzt nach dem Auflöseaggregat 2, vor der Heizschnecke, nach der Dispergierung 15, nach dem Stapelturm 17, und vom fertigen Endprodukt aseptisch Proben genommen und nach DIN 54379 Bestimmung der Gesamtkeimzahl (GKZ) an Papier Karton und Pappe, auf ihre Keimzahlen betreffend aerobe Bakterien, Sporen aerober Bakterien, Sporen anaerober Bakterien, Pilzen und Hefen untersucht.

In allen Versuchen lag die Zahl der Kolonien bildenden Einheiten für anaerobe Sporen und für Hefen < 10 im Stoff bzw. < 100 im fertigen Papier, d.h. unter der Erfassungsgrenze bei der Bestimmung nach DIN 54379.

Die weiteren Ergebnisse dieser Untersuchungen sind in den Tabellen 1 bis 6 zusammengefaßt. Zum Verständnis der Tabellen ist anzuführen, daß nach der genannten Norm Keimzahlen kleiner 10 pro Gramm oder Milliliter Stoff beziehungsweise kleiner als 100 pro Gramm Fertigprodukt nicht mehr erfaßt werden. Dies bedeutet, daß auf den angesetzten Platten keine Kolonien von Mikroorganismen sichtbar waren.

Die in den Tabellen 1 - 6 verwendeten Abkürzungen haben nachfolgende Bedeutung:

| | |
|---|---|
| A. spp. | Aspergillus spp. |
| B. c. | Bacillus cereus var. |
| B. ci. | Bacillus circulans |
| B. l. | Bacillus licheniformis |
| B. m. | Bacillus megaterium |
| B.p. | Bacillus pumilis |
| B. s | Bacillus subtilis |
| B. sp. | Bacillus sphaericus |
| E. spp. | Enterobacterium spp. |
| G. spp. | Geotrichium spp. |
| M. spp. | Mucor spp. |
| Ma. spp. | Mariannea spp. |
| N. spp. | Neurospora spp. |
| S. spp. | Sphingomonas spp. |
| P. spp. | Penicillium spp. |
| T. spp. | Trichoderma spp. |
| n.d. | nicht bestimmt |
| KBE | Kolonie bildende Einheiten = Anzahl der Keime |
| V1 bis V 6 | Versuche 1 bis 6 |

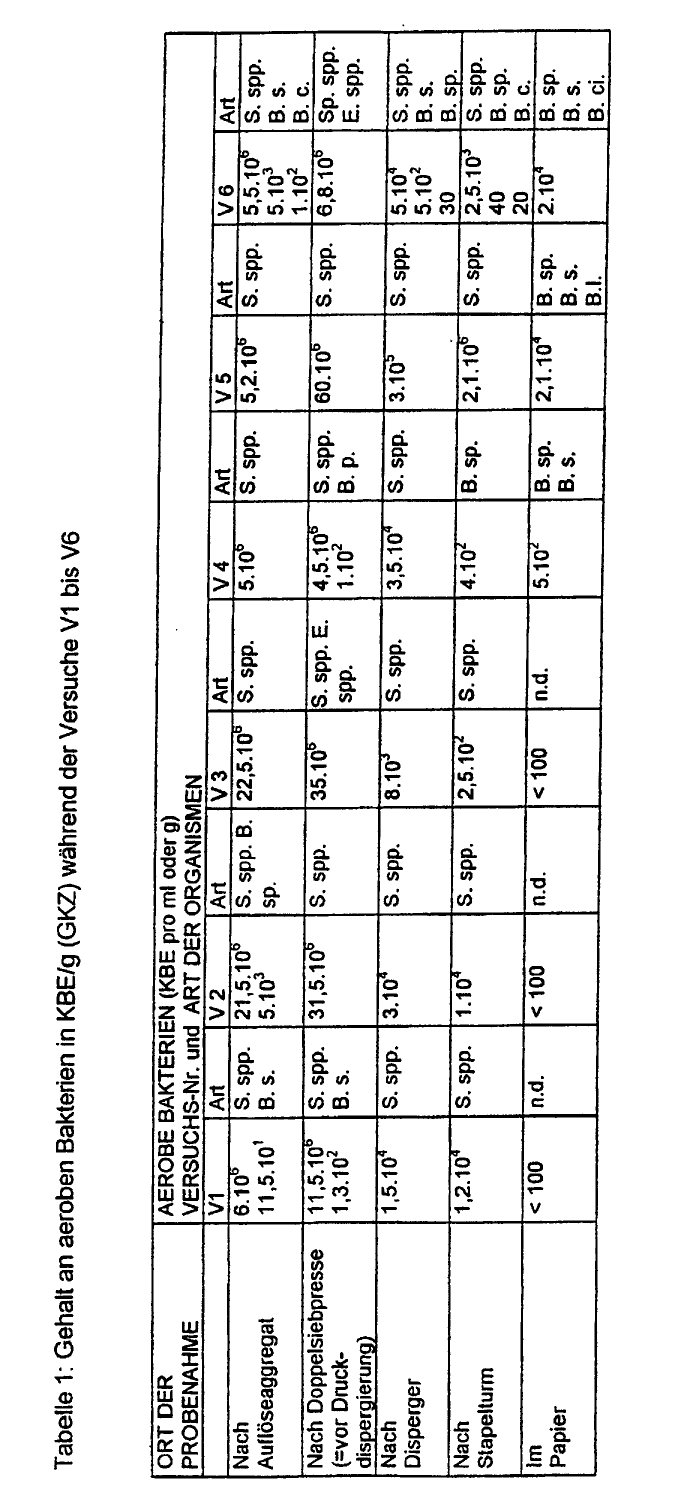

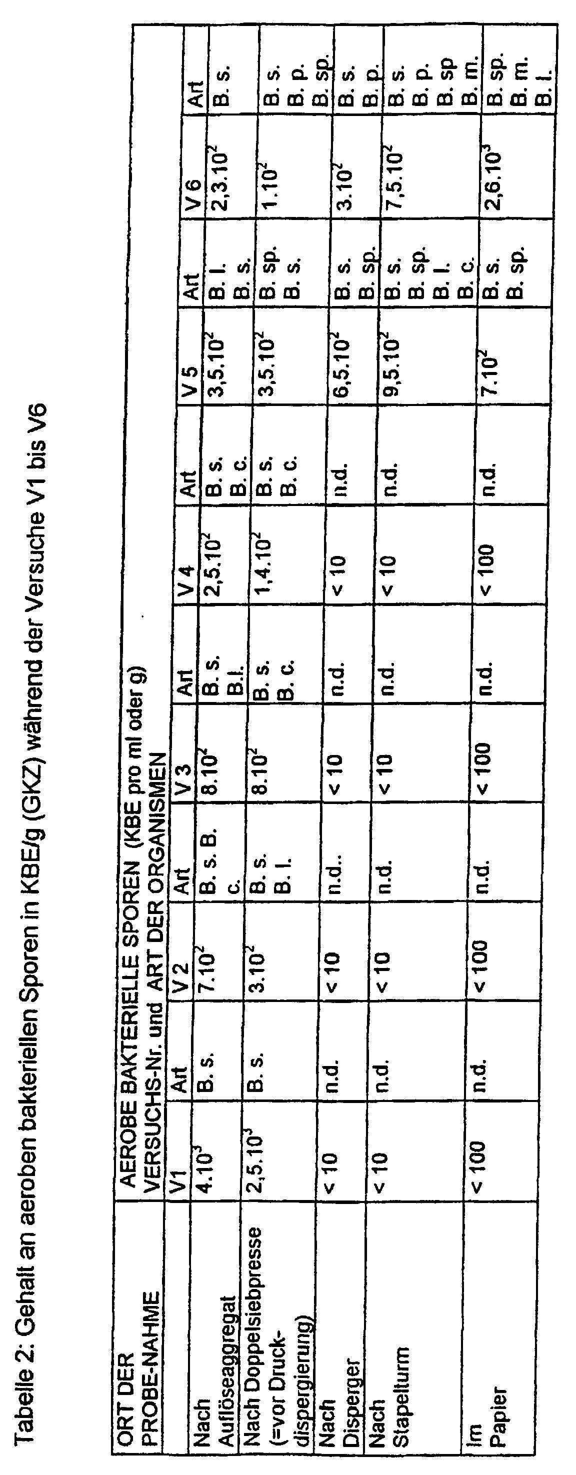

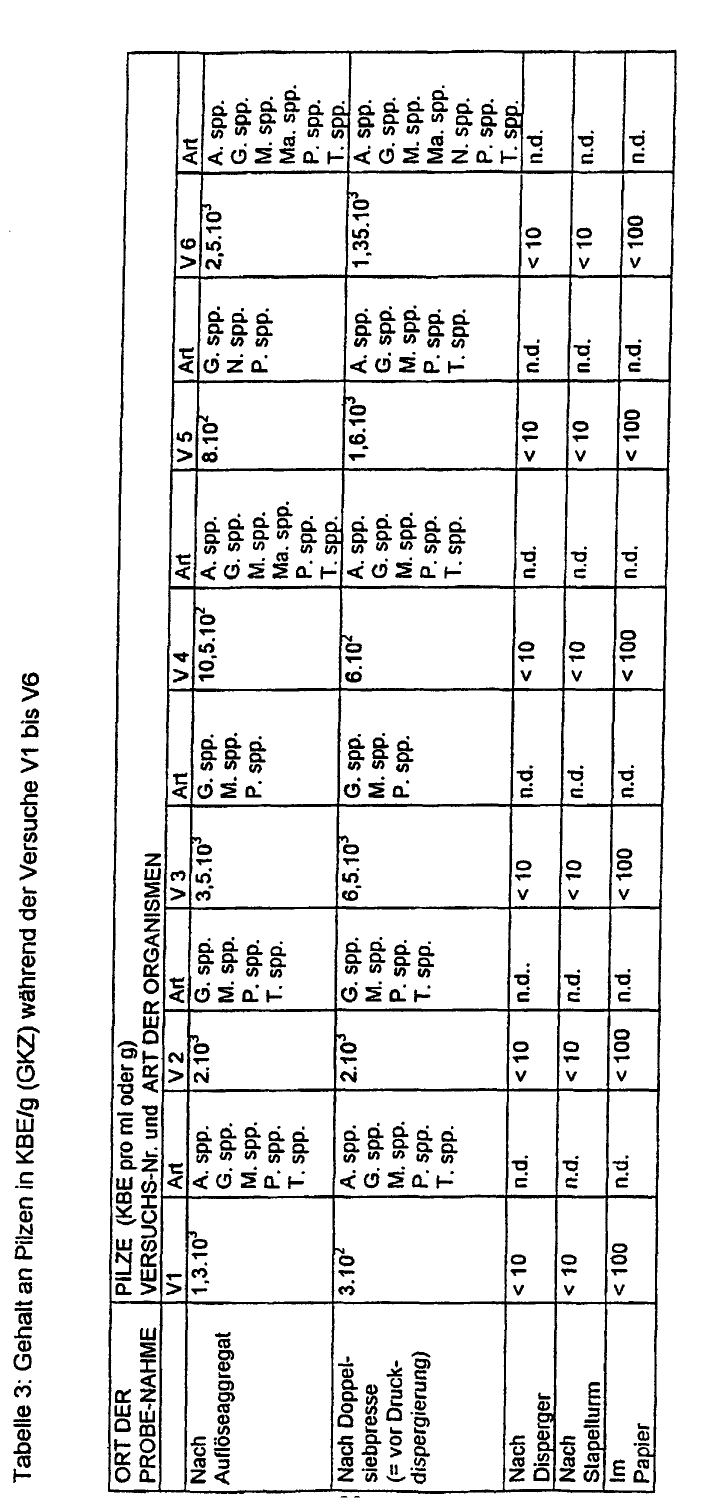

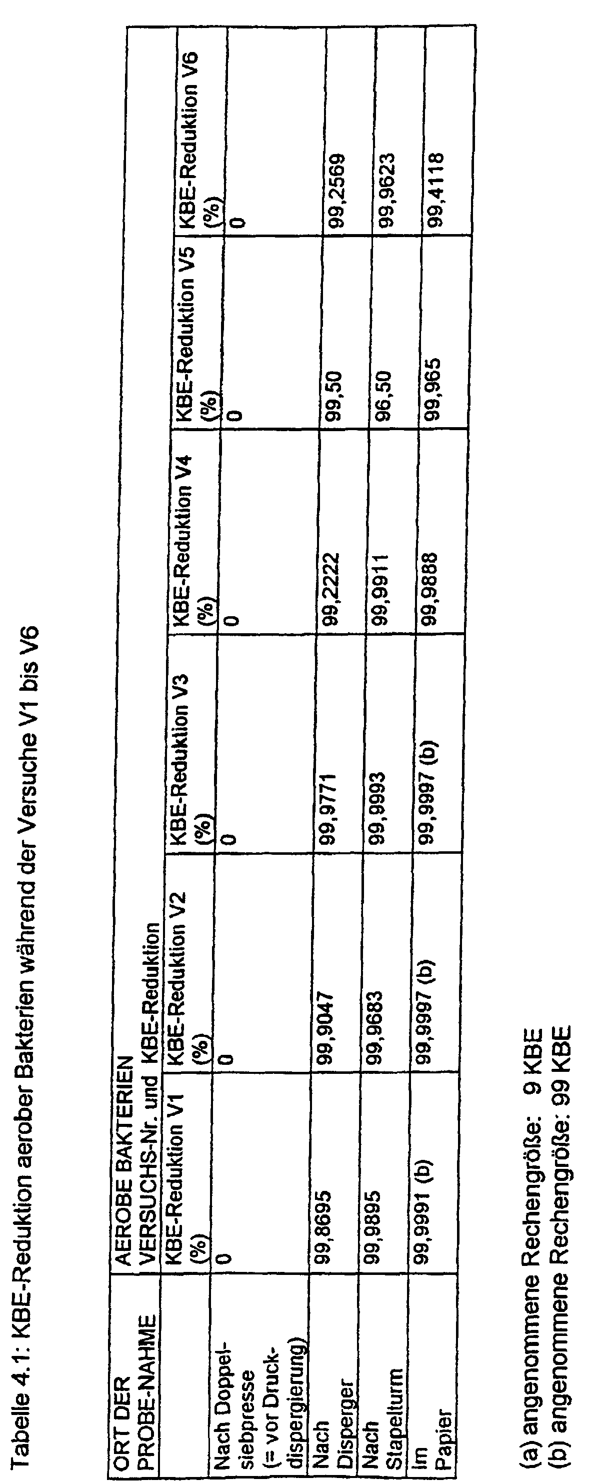

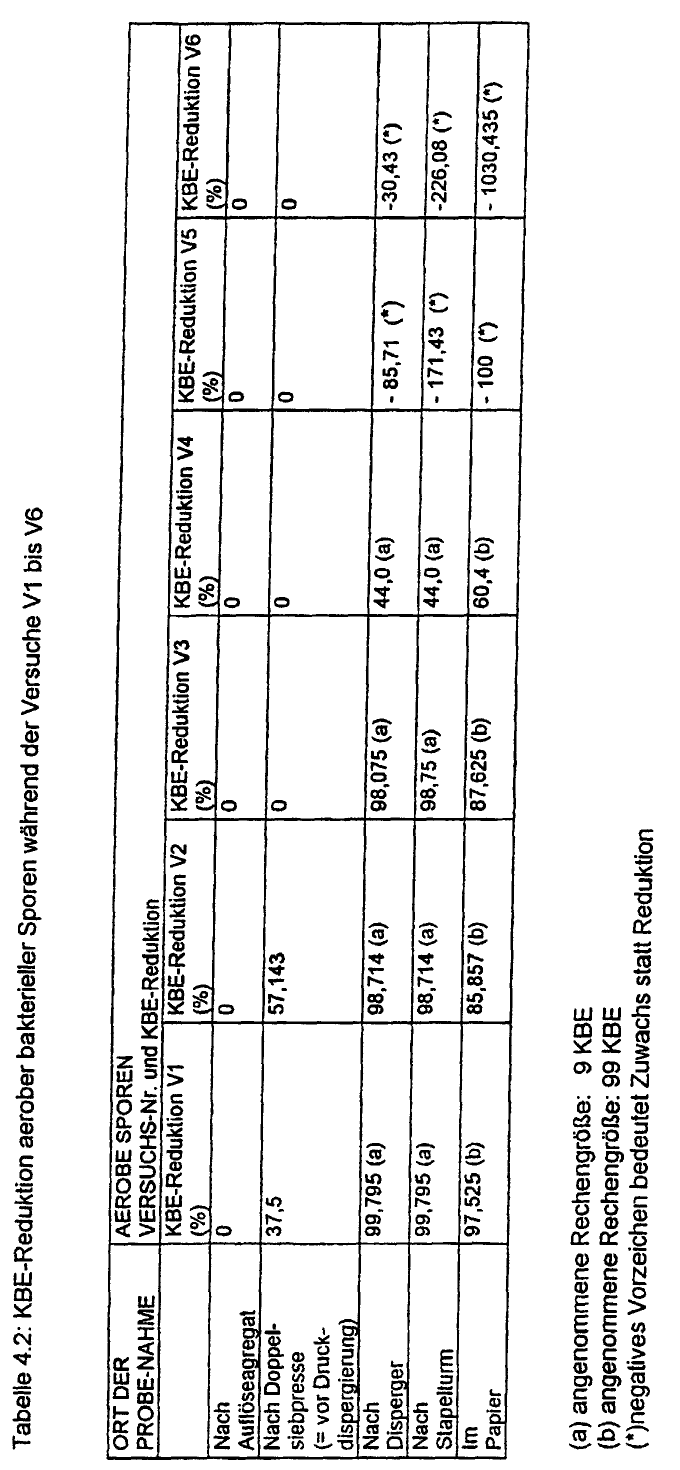

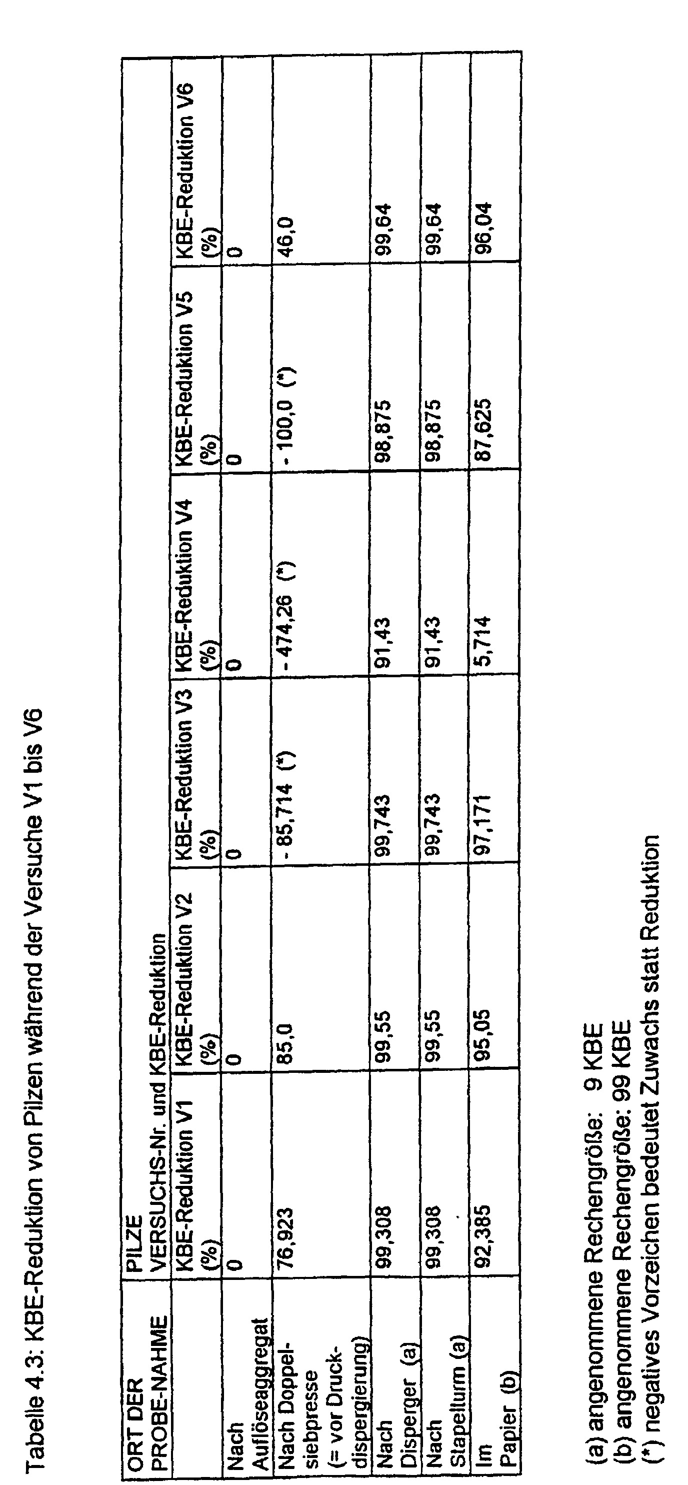

Die nachfolgende Tabelle 5 gibt eine Übersicht über die Werte für Oberflächen- und Gesamtkeimzahlen für das vorgenannte gemäß Versuchen V1 bis V6 erhaltene Recycling-Rohtissue.

**Tabelle 5:**

| OKZ, GKZ des Recycling Rohtissues | | |
|---|---|---|
| | **OKZ** | **GKZ** |
| **V1** | 0,8 | 220 |
| **V2** | 1,3 | 860 |
| **V3** | 2,5 | 890 |
| **V4** | 8,57 | 5100 |
| **V5** | 43 | 16600 |
| **V6** | 38 | 17070 |

Nach dem vorstehend beschriebenen erfindungsgemäßen Verfahren gemäß Figur 1 oder 2 wurde während der Versuche 1 bis 6 ausgehend von einem Altpapierausgangsstoff 1, der sich aus Mischungen von Qualitäten wie im vorstehend beschriebenen erfindungsgemäßen Verfahren zusammensetzt, in einer Auflösetrommel 2 der Firma Ahlström und folgenden technischen Kenndaten unter Zugrundelegung folgender Prozeßparameter dispergiert. Die Auflösetemperatur betrug 50 °C die Stoffdichte im Auflöseteil lag bei 14 bis 16 %, die Stoffdichte im Siebteil bei 3,5 bis 4,5 %, - bei einer Durchlaufzeit von 20 bis 25 Minuten.

In der nachfolgenden Trommelbütte der Firma Ahlström lagen folgende Prozeßparameter vor: eine Temperatur von 50 °C bei einer Stoffdichte von 3,5 bis 4,5 % und einem pH-Wert im neutralen Bereich. Die Aufenthaltsdauer betrug 5 Minuten.
In der nachfolgenden AP-Ableerbütte 3 betrug die Temperatur 45 bis 50 °C, und die Aufenthaltsdauer lag bei 33 Minuten.

In den nachfolgenden Reinigungsstufen, wie sie vorstehend beschrieben sind, waren Dickstoff-Reiniger 4 der Firma Voith/Sulzer eingesetzt, gefolgt von einer dreistufigen Vorsortieranlage 5 der Firma Voith/Sulzer mit einer maximalen Durchsatzmenge von 670 t otro/24h, gefolgt von Entstippem 7 der Firma Voith/Sulzer mit einer maximalen Durchsatzmenge von 800 t otro/24h, gefolgt von einer zweistufigen Flotationsanlage 8, bestehend aus 6+2 Zellen der Firma Voith/Sulzer mit einer maximalen Durchsatzmenge von 357 t otro/24h -, gefolgt von einer vierstufigen Cleaneranlage 10 der Firma Voith/Sulzer mit einer maximalen Durchsatzmenge von 415 t otro/24h, gefolgt von einer dreistufigen Schlitzsortieranlage 11 der Firma Voith/Sulzer mit einer maximalen Durchsatzmenge von 311 t otro/24h , gefolgt von einer Waschstufe, die sich in eine Scheibenfilteranlage 12 der Firma MFA mit einer maximalen Durchsatzmenge von 125 t otro/24h und einem Wäscher 12 der Fima Voith/Sulzer mit einer maximalen Durchsatzmenge von 215 t otro/24h, gefolgt von einer Siebbandpresse der Firma MFA, die als Eindicker wirkt, wobei als Prozeßparameter eine Temperatur von 45 °C, eine Stoffdichte nach der Sortierung von etwa 1 %, eine Stoffdichte nach der Eindickung von etwa 33 %, bei einem neutralen pH-Bereich und einer Stoffduchlaufzeit von insgesamt 20 Minuten eingesetzt wird.

Die aus zwei Elementen bestehende Druckdispergierungsanlage 15 besteht aus einer Heizschnecke der Firma Sprout und einem hieran anschließenden Disperger der Firma Sprout, wobei folgende Prozeßparameter eingesetzt werden: eine Temperatur in der Heizschnecke von mindestens 110 bis 130 °C, eine Verweilzeit in der Heizschnecke von 7 Minuten, eine Temperatur zwischen den Mahlplatten von 121 °C, eine mechanische Eigenenergie auf den Stoff von etwa 60 Kwh/to atro Stoff, eine Stoffdichte von mindestens 30 % Trockengewicht bei einem Überdruck von 0,5 bis 0,7 bar und einem Dampfverbrauch von ungefähr 0,5 to Dampf/to o. Stoff.

Im letzten Schritt, dem sogenannten Stapelturm 17, der ein Volumen von etwa 400 m³ aufweist, wird das eingetragene Produkt bei Temperaturen von etwa 80 °C bei einer Stoffdichte von 10 % für mindestens 2 Stunden belassen. Das auf diese Weise erzeugte Produkt (Recycling Pulpe) 18 wurde zu einem sporenfreien Recycling-Rohtissue mit einem Flächengewicht von 18 bis 20,2 g/m² umgesetzt. Von diesem Recycling-Rohtissue 25 wurde sowohl die Gesamtkeimzahl, Oberflächenkeimzahl, die Zahlen aerober Bakterien, Sporen aerober Bakterien, Sporen anaerober Bakterien, Pilze und Hefen bestimmt.

## Patentansprüche

1. Verfahren zur Aufbereitung von Altpapier zu Pulpe, Rohtissue und Tissueprodukten ohne Einsatz von Bioziden und Chlorverbindungen, unter weitgehender Vermeidung von Wasserstoffperoxid und / oder Peressigsäure mit einer Gesamtkeimzahl kleiner 1000 KBE/g und einer Oberflächenkeimzahl kleiner 20 KBE/dm², enthaltend die folgenden Verfahrensschritte:
- eine Behandlung des vorsortierten, gegebenenfalls vorzerkleinerten, Altpapierausgangsstoffs in einer wasserenthaltenden Umgebung zur Aktivierung der Mikroorganismensporen,
- eine Weiterverarbeitung des gekeimte Sporen enthaltenden Altpapierausgangsstoffs, vorzugsweise in wenigstens einer Sortierstufe in an sich bekannter Weise bei Temperaturen oberhalb der Raumtemperatur (20 bis 70 °C), umfassend gegebenenfalls eine Vorsortierung, eine Flotation, eine Feinsortierung, eine Wäsche, eine Eindickung, unter Rückführung des abgetrennten und entstofften klarwassers bis zur Auflösungsstufe,
- gefolgt von einer Heißdispergierung des weiterverarbeiteten Altpapierausgangsstoffs in einer Wasserdampfatmosphäre bei Atmosphärenüberdruck und
- Aufarbeitung in an sich bekannter Weise zu einer weitgehend sporenfreien Recycling Pulpe, daraus zu einem weitgehend sporenfreiem Recycling-Rohtissue und daraus zu einem für den Verbrauch geeigneten endfertigen Tissueprodukt,
- **dadurch gekennzeichnet dass** nach der Behandlung des Altpapierausgangsstoffs eine Keimung der Sporen und nach der Heißdispergierung eine Temperung erfolgt.

2. Verfahren nach Anspruch 1, **dadurch gekennzeichnet, dass** als sporenaktivierende Behandlung eine thermische Behandlung, eine Lichtwellenbehandlung, eine enzymatische oder eine, entsprechende chemische Behandlung eingesetzt wird.

3. Verfahren nach vorstehenden Ansprüchen, **dadurch gekennzeichnet, dass** man als wasserenthaltende Umgebung des Altpapierausgangsstoffs einen in Wasser dispergierten Papierausgangsstoff einsetzt.

4. Verfahren nach vorstehenden Ansprüchen, **dadurch gekennzeichnet, dass** man die Keimung der Sporen über einen Zeitraum von 60 bis 120 Minuten, vorzugsweise 70 bis 100 Minuten, bei Temperaturen von 20 bis 90 °C, vorzugsweise 50 bis 80 °C, vornimmt.

5. Verfahren nach Anspruch 1, **dadurch gekennzeichnet, dass** man die Heißdispergierung in einer Wasserdampfatmosphäre oberhalb atmosphärischen Drucks, vorzugsweise unter einem Druck von 0,1 bis 4 bar, vorzugsweise 1,2 bis 1,6 bar, durchführt.

6. Verfahren nach Anspruch 5, **dadurch gekennzeichnet, dass** man die Heißdispergierung bei Temperaturen von 100 bis 140 °C, vorzugsweise 100 bis 130 °C, insbesondere bei etwa 121 °C für eine zur Sterilisierung ausreichenden Zeit vornimmt.

7. Verfahren nach vorstehenden Ansprüchen, **dadurch gekennzeichnet, dass** man im Anschluss an die Dispergierung eine Temperung für eine Zeit von wenigstens 120 Minuten bis 240 Minuten, vorzugsweise 150 bis 180 Minuten, vornimmt.

8. Verfahren nach Anspruch 7, **dadurch gekennzeichnet, dass** die vorgenannte Temperung bei 50 °C bis 90 °C, insbesondere bei 60 bis 85 °C und einer Stoffdichte von 5 bis 16 Gew.-%, vorzugsweise 10 bis 14 Gew.-%, durchgeführt wird.

9. Verfahren nach vorstehenden Ansprüchen, **dadurch gekennzeichnet, dass** die sporilierten Mikroorganismen Keimzellen von Algen, Pilzen und / oder Bakterien sind.

10. Verfahren nach vorstehenden Ansprüchen, **dadurch gekennzeichnet, dass** man als Altpapierausgangsstoff eine aus unteren Sorten, mittleren Sorten, besseren Sorten und krafthaltigen Sorten ausgewähltes Altpapier einsetzt.

11. Verfahren nach vorstehenden Ansprüchen, **dadurch gekennzeichnet, dass** man die sporenfreie Recycling-Pulpe aus Altpapier zu Recycling-Rohtissuepapier und dieses zu endfertigen, für den Verbrauch bestimmten Tissue-Rollenprodukten bzw. Tissue-Falzprodukten weiterverarbeitet.

12. Recycling-Rohtissue (25) erhältlich durch eine Behandlung des vorsortierten und / oder unsortierten, gegebenenfalls vorzerkleinerten, Altpapierausgangsstoffs in einer wasserenthaltenden Umgebung zur Aktivierung der Mikroorganismensporen, eine Keimung der Sporen, eine Weiterverarbeitung des gekeimten sporenenthaltenden Papierausgangsstoffs in an sich bekannter Weise bei Temperaturen oberhalb Raumtemperatur (20 bis 70 °C), umfassend gegebenenfalls eine Vorsortierung, eine Flotation, eine Feinsortierung und eine kombinierte Wäsche und Eindickung, eine Dämpfschnecke, eine Dispergierung des weiterverarbeiteten Papierausgangsstoffs in einer Wasserdampfatmosphäre bei Atmosphärenüberdruck, Temperung und Aufarbeitung in an sich bekannter Weise zu weitgehend sporenfreier Recycling-Pulpe (18) und daraus in an sich bekannter Weise zu weitgehend sporenfreiem Recycling-Rohtissue, **dadurch gekennzeichnet, dass** es eine Geamtkeimzahl von weniger als 1000 KBE/g und einer Oberflächenkeimzahl von weniger als 20 KBE/dm² aufweist.

13. Vorrichtung zur Durchführung des Verfahrens nach Ansprüchen 1 bis 11, umfassend im wesentlichen ein Auflöseaggregat (2), gegebenenfalls eine Bütte bzw. eine Ableerbütte (3), weitere übliche Sortierstufen in Form einer Vorsortierungseinrichtung (5), einer Flotationseinrichtung (8), einer Reinigungsvorrichtung (10), einer Feinsortiervorrichtung, einer Wascheinrichtung sowie einer Eindickungseinrichtung (14), gefolgt von einer Druckdispergierungseinrichtung (15), Stapeleinrichtung mit Tempervorrichtung (17) gefolgt von einer Stoffverdünnungsvorrichtung mittels Papiermaschinenrückwasser, zu einer weitgehend sporenfreien Recycling Pulpe (18) und Weiterbearbeitungseinrichtungen zum jeweiligen Altpapiererzeugnis (25, 27).

14. Verwendung des Verfahrens nach Ansprüchen 1 bis 11 oder des Recycling-Rohtissues nach Anspruch 12 zur Herstellung von Tissuepapiererzeugnissen, insbesondere Falz- und Rollenprodukten.

15. Endfertiges Tissueprodukt (27) mit einer Gesamtkeimzaht kleiner 1000 KBE/g und einer Oberflächenkeimzahl kleiner 20 KBE/dm², erhältlich nach dem Verfahren nach Ansprüchen 1 bis 11.

## Claims

1. Process for the treatment of old paper to be processed into pulp, base tissue and tissue paper products, without the use of biocides and chlorine compounds as well as with the virtual avoidance of hydrogen peroxide and/or peracetic acid, with a total germ count of less than 1000 CFU/g and/or a surface germ count of less than 20 CFU/dm², comprising the following process steps:
• a treatment of the pre-sorted, optionally pre-shredded, old-paper starting material in an environment containing water in order to activate the microorganism spores,
• a further processing of the old-paper starting material containing germinated spores, preferably in at least one separation stage in a generally known manner at temperatures above room temperature (20°C to 70°C), optionally comprising pre-sorting, flotation, fine-sorting, washing and deckering, while returning the separated and de-pulped clear water, all the way to the dissolving stage,
• followed by hot dispersion of the further processed old-paper starting material in a water vapor atmosphere at atmospheric overpressure and,
• processing in a generally known manner into a largely spore-free recycled pulp, from that into a largely spore-free base tissue and from that into a tissue product suited for final consumption,
**characterized in that** a germination of the spores is carried out subsequent to the further processing of the old-paper starting material and
a temperature-controlled treatment is carried out subsequent to the hot dispersion.

2. Process according to Claim 1, **characterized in that** a thermal treatment, a light wave treatment, an enzymatic treatment or an appropriate chemical treatment is used as the spore-activating treatment.

3. Process according to preceding claims, **characterized in that** a paper starting material dispersed in water is used as the environment containing water for the old-paper starting material.

4. Process according to preceding claims, **characterized in that** the germination of the spores is carried out over a period of time of 60 to 120 minutes, preferably 70 to 100 minutes, at temperatures ranging from 20°C to 90°C, preferably from 50°C to 80°C.

5. Process according to claim 1, **characterized in that** the hot dispersion is carried out in a water vapor atmosphere above atmospheric pressure, preferably at a pressure of 0.1 to 4 bar, preferably 1.2 to 1.6 bar.

6. Process according to claim 5, **characterized in that** the hot dispersion is carried out at temperatures of 100°C to 140°C, preferably 100°C to 130°C, especially at about 121°C, for a period of time sufficient to achieve sterilization.

7. Process according to preceding claims, **characterized in that**, following the dispersion, a temperature-controlled treatment is carried out for a period of time of at least 120 to 240 minutes, preferably 150 to 180 minutes.

8. Process according to Claim 7, **characterized in that** the above-mentioned temperature-controlled treatment is carried out at 50°C to 90°C, especially 60°C to 85°C, and at a pulp consistency of 5% to 16% by weight, preferably 10% to 14% by weight.

9. Process according to preceding claims, **characterized in that** the sporulated microorganisms are germ cells of algae, fungi and/or bacteria.

10. Process according to preceding claims, **characterized in that** old paper selected from low-grade, medium-grade or high-grade paper as well as kraft paper is used as the old-paper starting material.

11. Process according to preceding claims, **characterized in that** the spore-free recycled pulp made of old paper is further processed into recycled base tissue paper and this is further processed into tissue rolled products or tissue folded products intended for consumption.

12. Recycled base tissue (25) which can be obtained by: a treatment of the pre-sorted and/or unsorted, optionally pre-shredded, old-paper starting material in an environment containing water in order to activate the microorganism spores, a germination of the spores, a further processing of the old-paper starting material containing germinated spores, in a generally known manner at temperatures above room temperature (20°C to 70°C), optionally comprising pre-sorting, flotation, fine-sorting, and a combined washing and deckering, a steam screw, a dispersion of the further processed old-paper starting material in a water vapor atmosphere at atmospheric overpressure, temperature-controlled treatment and processing in a generally known manner into a largely spore-free recycled pulp (18), and from that into a largely spore-free base tissue, **characterized in that** having a total germ count of less than 1000 CFU/g and a surface germ count of less than 20 CFU/dm².

13. Device for carrying out the process according to Claims 1 through 11, comprising essentially a dissolving aggregate (2), optionally a vat or a dump chest (3), other commonly employed sorting stages in the form of a pre-sorting unit (5), a flotation unit (8), a cleaning unit (10), a fine-sorting unit, a washing unit as well as a deckering unit (14), followed by a pressure dispersion device (15), stacking unit including temperature controlling device (17) subsequent substance dilution device using papermaking machine return water to form a largely spore-free recycled pulp (18) and further processing installations to produce the old-paper product in question (25, 27).

14. Use of the process according to Claims 1 through 11 or of the recycled base tissue according to Claim 12 for the production of tissue paper products, especially folded and rolled products.

15. Ready-to-use tissue product (27) with a total germ count of less than 1000 CFU/g and a surface germ count of less than 20 CFU/dm², a product that can be obtained by means of the process according to Claims 1 through 11.

## Revendications

1. Procédé de transformation de vieux papiers en pâte, en papier de soie brut et en produits à base de papier de soie sans utilisation de biocides ni de composés chlorés, en évitant dans une large mesure le peroxyde d'hydrogène et/ou l'acide peracétique, avec un nombre total de germes inférieur à 1000 ufc/g et un nombre de germes de surface inférieur à 20 ufc/dm², comprenant les étapes de procédé suivantes :
- un traitement du matériau de départ à base de vieux papiers préalablement triés et le cas échéant préalablement broyés dans un environnement contenant de l'eau afin d'activer les spores des micro-organismes,
- une transformation du matériau de départ à base de vieux papiers contenant des spores, de préférence dans au moins un étage de tri, d'une manière en soi connue, à des températures supérieures à la température ambiante (de 20 à 70°C), comprenant le cas échéant un pré-triage, une flottation, un triage fin, un lavage, un épaississement, avec recyclage des eaux clarifiées séparées et débarrassées des matières vers un étage de désagrégation,
- suivie d'une dispersion à chaud du matériau de départ à base de vieux papiers transformés sous une atmosphère de vapeur d'eau à la pression atmosphérique relative, et
- d'une transformation, d'une manière en soi connue, en pâte de recyclage pratiquement exempte de spores et, à partir de celle-ci, en papier de soie brut de recyclage et, à partir de ce dernier, en produit fini à base de papier de soie prêt à l'emploi,
- **caractérisé en ce que**, après le traitement du matériau de départ à base de vieux papiers, on effectue une germination des spores et, après la dispersion à chaud, un étuvage.

2. Procédé selon la revendication 1, **caractérisé en ce que** l'on utilise comme traitement activant les spores un traitement thermique, un traitement par un rayonnement lumineux, un traitement enzymatique ou un traitement chimique correspondant.

3. Procédé selon les revendications précédentes, **caractérisé en ce que**, comme environnement contenant de l'eau pour le matériau de départ à base de vieux papiers, on utilise un matériau de départ à base de papier dispersé dans de l'eau.

4. Procédé selon les revendications précédentes, **caractérisé en ce que** l'on effectue la germination des spores pendant une durée de 60 à 120 minutes, de préférence de 70 à 100 minutes, à des températures de 20 à 90°C, de préférence de 50 à 80°C.

5. Procédé selon la revendication 1, **caractérisé en ce que** l'on effectue la dispersion à chaud dans une atmosphère de vapeur d'eau au-dessus de la pression atmosphérique, de préférence sous une pression de 0,1 à 4 bars, de préférence de 1,2 à 1,6 bars.

6. Procédé selon la revendication 5, **caractérisé en ce que** l'on effectue la dispersion à chaud à des températures de 100 à 140°C, de préférence de 100 à 130°C et notamment à environ 121°C pendant une durée suffisante pour la stérilisation.

7. Procédé selon les revendications précédentes, **caractérisé en ce que**, à la suite de la dispersion, on effectue un étuvage pendant une durée d'au moins 120 minutes à 240 minutes, de préférence de 150 à 180 minutes.

8. Procédé selon la revendication 7, **caractérisé en ce que** l'étuvage précité s'effectue à une température de 50 à 90°C, en particulier de 60 à 85°C, et à une densité de matière de 5 à 16% en poids, de préférence de 10 à 14% en poids.

9. Procédé selon les revendications précédentes, **caractérisé en ce que** les micro-organismes sporulés sont des cellules germinales d'algues, de champignons et/ou de bactéries.

10. Procédé selon les revendications précédentes, **caractérisé en ce que** l'on utilise comme matériau de départ à base de vieux papiers un vieux papier choisi parmi des qualités inférieures, des qualités moyennes, des qualités meilleures et des qualités contenant du kraft.

11. Procédé selon les revendications précédentes, **caractérisé en ce que** l'on transforme la pâte de recyclage exempte de spores provenant de vieux papiers en papier de soie brut de recyclage et ce dernier en produits finis prêts à l'emploi à base de papier de soie en rouleaux ou de papier de soie plié.

12. Papier de soie brut de recyclage (25) pouvant être obtenu en traitant le matériau de départ à base de vieux papiers préalablement triés et/ou non triés et le cas échéant préalablement broyés dans un environnement contenant de l'eau afin d'activer les spores de micro-organismes, en faisant germer les spores, en transformant le matériau de départ à base de vieux papiers contenant des spores germées, d'une manière en soi connue, à des températures supérieures à la température ambiante (de 20 à 70°C), comprenant le cas échéant un pré-triage, une flottation, un triage fin et un lavage combiné avec un épaississement, un dispositif de vaporisation à vis sans fin, en dispersant le matériau de départ à base de vieux papiers transformé dans une atmosphère de vapeur d'eau à la pression atmosphérique relative, en l'étuvant et en le transformant d'une manière en soi connue en une pâte de recyclage (18) pratiquement exempte de spores et, à partir de celle-ci, d'une manière en soi connue, en papier de soie brut de recyclage pratiquement exempt de spores, **caractérisé en ce qu'**il présente un nombre total de germes inférieur à 1000 ufc/g et un nombre de germes de surface inférieur à 20 ufc/dm².

13. Dispositif pour réaliser le procédé selon les revendications 1 à 11, comprenant essentiellement un groupe de désagrégation (2), le cas échéant un bac ou un bac de vidange (3), d'autres étages de tri usuels sous la forme d'un dispositif de pré-triage (5), d'un dispositif de flottation (8), d'un dispositif de nettoyage (10), d'un dispositif de triage fin, d'un dispositif de lavage ainsi que d'un dispositif d'épaississement (14), suivi d'un dispositif de dispersion sous pression (15), d'un dispositif d'empilage avec dispositif d'étuvage (17) suivi d'un dispositif de dilution des matières avec de l'eau de recyclage de la machine à papier, afin de produire une pâte de recyclage (18) pratiquement exempte de spores, et des dispositifs de transformation en produits respectifs à base de vieux papiers (25, 27).

14. Utilisation du procédé selon les revendications 1 à 11 ou du papier de soie brut de recyclage selon la revendication 12 pour fabriquer des produits à base de papier de soie, notamment des produits pliés et en rouleaux.

15. Produit fini à base de papier de soie (27) ayant un nombre total de germes inférieur à 1000 ufc/g et un nombre de germes de surface inférieur à 20 ufc/dm² et pouvant être obtenu par le procédé selon les revendications 1 à 11.
